(19) Europäisches Patentamt
European Patent Office
Office européen des brevets

(11) EP 4 455 327 A1

(12) EUROPEAN PATENT APPLICATION
published in accordance with Art. 153(4) EPC

(43) Date of publication:
**30.10.2024 Bulletin 2024/44**

(21) Application number: **22911357.6**

(22) Date of filing: **22.12.2022**

(51) International Patent Classification (IPC):
***C22C 38/00*** *(2006.01)* ***H01F 1/01*** *(2006.01)*
***F25B 21/00*** *(2006.01)*

(52) Cooperative Patent Classification (CPC):
**C22C 38/00; F25B 21/00; H01F 1/01;** Y02B 30/00

(86) International application number:
**PCT/JP2022/047404**

(87) International publication number:
**WO 2023/120655 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 JP 2021208774**

(71) Applicant: **DAIKIN INDUSTRIES, LTD.**
**Osaka-shi, Osaka 530-0001 (JP)**

(72) Inventors:
- **MAKINO, Yukihiro**
  **Osaka-shi, Osaka 530-0001 (JP)**
- **SATO, Kazunori**
  **Suita-shi, Osaka 565-0871 (JP)**
- **OGUCHI, Tamio**
  **Suita-shi, Osaka 565-0871 (JP)**
- **TRAN, Hung Ba**
  **Suita-shi, Osaka 565-0871 (JP)**
- **FUKUSHIMA, Tetsuya**
  **Tokyo, 113-8654 (JP)**

(74) Representative: **Hoffmann Eitle**
**Patent- und Rechtsanwälte PartmbB**
**Arabellastraße 30**
**81925 München (DE)**

# (54) UNIT, TEMPERATURE ADJUSTMENT MODULE, AND TEMPERATURE ADJUSTMENT DEVICE

(57) Provided are a unit having an alloy whose Curie temperature is controlled while suppressing a decrease in the amount of entropy change, a temperature control module, and a temperature control apparatus. A unit (10) includes a first alloy (11) having a structure in which, in a crystal structure of a $La(Fe, Si)_{13}$-based alloy, a lanthanum element position is replaced with a group 1 element other than hydrogen or a group 2 element, and a second alloy (12) having a structure in which, in a crystal structure of a $La(Fe,Si)_{13}$-based alloy, a lanthanum element position is replaced with a group 1 element other than hydrogen or a group 2 element and having a composition different from that of the first alloy.

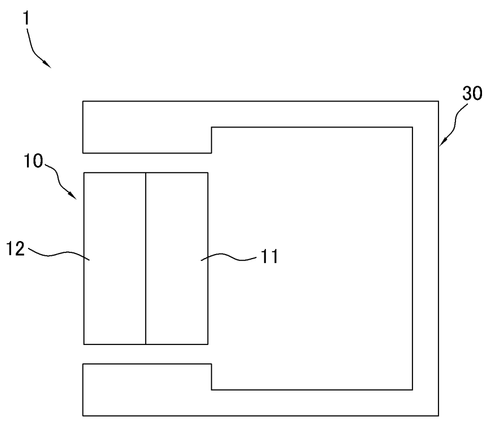


FIG. 1

EP 4 455 327 A1

## Description

### TECHNICAL FIELD

The present disclosure relates to a unit, a temperature control module, and a temperature control apparatus.

### BACKGROUND ART

Hitherto, magnetic refrigeration using a magnetic entropy change has been researched and developed as an environmentally friendly refrigeration technology that avoids the use of chlorofluorocarbon gases. An example of such a magnetic refrigeration technique is an AMR system (Active Magnetic Regenerative Refrigeration), and, for example, materials having a $NaZn_{13}$ structure (La-Fe-Si-based materials) are used as solid materials having a specific crystal structure with a large amount of magnetic entropy change.

In such a magnetic material used for magnetic refrigeration, the Curie temperature of the magnetic material can be increased by increasing the amount of hydrogen atoms inserted into the interstitial sites of the crystal by hydrogenation. In addition, the Curie temperature can be changed by increasing the degree of replacement of iron atoms with cobalt atoms in the magnetic material. Such adjustments can provide a magnetic material having a Curie temperature suitable for the intended use.

However, when hydrogen atoms are inserted between the lattices of the crystal, the hydrogen atoms may move due to positional displacement of the crystal lattices caused by a phase transition or the like, and the crystal composition ratio in the solid may become uneven, which may result in separation, in the solid, into two phases of a crystal composition portion having a high hydrogen atom concentration and a crystal composition portion having a low hydrogen atom concentration. Specifically, Non Patent Literature 1 (IEEE TRANSACTIONS ON MAGNETICS, VOL. 47, NO. 10, OCTOBER 2011) has reported that a solid material having a Curie temperature of 310K immediately after preparation becomes unstable after 35 days at around the Curie temperature, and separation into two phases of a phase having a Curie temperature of 305K and a phase having a Curie temperature of 312K occurs. Thus, if portions having different hydrogen atom concentration are generated in one solid, there is a concern that the operation at a Curie temperature that has been initially set may become difficult.

On the other hand, according to PTL 1 (Japanese Unexamined Patent Application Publication No. 2008-150695), the replacement of iron atoms in a magnetic material with cobalt atoms reduces the magnetization and reduces the amount of entropy change due to the magnetism, resulting in a decrease in the amount of heat associated with the phase transition that can be used for refrigeration.

### SUMMARY OF INVENTION

<Technical Problem>

Accordingly, there is a demand for a magnetic material having an alloy whose Curie temperature is controlled while suppressing a decrease in the amount of entropy change.

<Solution to Problem>

A unit according to a first aspect includes a first alloy and a second alloy. The first alloy has a structure in which, in a crystal structure of a $La(Fe, Si)_{13}$-based alloy, a lanthanum element position is replaced with a group 1 element other than hydrogen or a group 2 element. The second alloy has a structure in which, in a crystal structure of a $La(Fe, Si)_{13}$-based alloy, a lanthanum element position is replaced with a group 1 element other than hydrogen or a group 2 element. The second alloy has a composition different from that of the first alloy.

According to this unit, it is possible to provide an alloy whose Curie temperature is controlled while suppressing a decrease in the amount of entropy change. In addition, the use of the first alloy and the second alloy having compositions different from each other enables the temperature control by the magnetic refrigeration technology to be efficiently performed.

A unit according to a second aspect is the unit according to the first aspect, wherein the unit is capable of controlling a temperature of a temperature control target by causing a magnetic entropy change.

According to this unit, the temperature of the temperature control target can be controlled using energy obtained by the magnetic entropy change in the first alloy and the second alloy.

A unit according to a third aspect is the unit according to the first aspect or the second aspect, wherein a phase transition temperature of the first alloy and a phase transition temperature of the second alloy are different.

According to this unit, the use of the alloys having different phase transition temperatures enables the temperature control using the unit to be efficiently performed.

A unit according to a fourth aspect is the unit according to any one of the first aspect to the third aspect, wherein the first alloy and the second alloy are connected in a state of being arranged side by side.

According to this unit, a temperature of a medium, whose temperature has been controlled by one of the first alloy and the second alloy, can be easily further controlled by the other of the first alloy and the second alloy.

A unit according to a fifth aspect is the unit according to any one of the first aspect to the fourth aspect, wherein the first alloy has a structure in which, in the crystal structure of the $La(Fe,Si)_{13}$-based alloy, a lanthanum element is replaced with an element selected from elements of the fifth period and the sixth period. The second alloy has a structure in which, in the crystal structure of the $La(Fe,Si)_{13}$-based alloy, a lanthanum element is replaced with an element selected from elements of the fifth period and the sixth period.

According to this unit, the amounts of entropy change of the first alloy and the second alloy can be more sufficiently ensured.

A unit according to a sixth aspect is the unit according to any one of the first aspect to the fifth aspect, wherein the first alloy has a structure in which, in the crystal structure of the $La(Fe,Si)_{13}$-based alloy, a lanthanum element is replaced with a group 1 element other than hydrogen and a structure in which the lanthanum element is replaced with a group 2 element, or the second alloy has a structure in which, in the crystal structure of the $La(Fe,Si)_{13}$-based alloy, a lanthanum element is replaced with a group 1 element other than hydrogen and a structure in which the lanthanum element is replaced with a group 2 element.

In each of the alloys of this unit, the phase transition temperature and the amount of entropy change are more precisely controlled.

A unit according to a seventh aspect is the unit according to any one of the first aspect to sixth aspect, wherein the first alloy has a structure in which, in the crystal structure of the $La(Fe,Si)_{13}$-based alloy, an iron element is replaced with a cobalt element, or the second alloy has a structure in which, in the crystal structure of the $La(Fe,Si)_{13}$-based alloy, an iron element is replaced with a cobalt element.

In each of the alloys of this unit, an alloy having a phase transition temperature and an amount of entropy change that correspond to the degree of replacement of the iron element with the cobalt element is obtained.

A unit according to an eighth aspect is the unit according to any one of the first aspect to the seventh aspect, wherein the first alloy has a structure in which, in the crystal structure of the $La(Fe,Si)_{13}$-based alloy, a silicon element is replaced with at least one element selected from the group consisting of aluminum, carbon, germanium, gallium, phosphorus, and arsenic, or the second alloy has a structure in which, in the crystal structure of the $La(Fe,Si)_{13}$-based alloy, a silicon element is replaced with at least one element selected from the group consisting of aluminum, carbon, germanium, gallium, phosphorus, and arsenic.

In each of the alloys of this unit, even in the case where the silicon element is replaced with the above specific element, an alloy having a phase transition temperature and an amount of entropy change that correspond to the degree of replacement at the lanthanum element position is obtained.

A temperature control module according to a ninth aspect includes the unit according to any one of the first aspect to the eighth aspect and a magnetic field applicator. The magnetic field applicator is capable of changing a magnetic field applied to the unit.

In this temperature controlmodule, the temperature of the temperature control target can be controlled by using heat emitted from the unit to which the magnetic field is applied from the magnetic field applicator.

A temperature control apparatus according to a tenth aspect includes the temperature controlmodule according to the ninth aspect, a heat medium, and a heat medium moving device. The heat medium is used in thermal contact with the unit. The heat medium moving device moves the heat medium.

In this temperature control apparatus, heat can be extracted by moving the heat medium heated by the unit, and cold energy can be extracted by moving the heat medium whose heat has been absorbed by the unit.

## BRIEF DESCRIPTION OF DRAWINGS

<Fig. 1> Fig. 1 is a schematic diagram of a temperature control module.
<Fig. 2> Fig. 2 is a schematic diagram of a temperature control apparatus.
<Fig. 3> Fig. 3 is an external view of an example of a magnetic material.
<Fig. 4> Fig. 4 is an external view of another example of a magnetic material.
<Fig. 5> Fig. 5 is a graph showing the dependence of the Curie temperature on a replacement ratio of La.
<Fig. 6> Fig. 6 is a graph showing the dependence of the magnetization on a replacement ratio of La.
<Fig. 7> Fig. 7 is a graph showing the dependence of the Curie temperature and the entropy change on the amount of hydrogen inserted, the graph being obtained in an experiment.

<Fig. 8> Fig. 8 is a graph showing the dependence of the Curie temperature on the amount of hydrogen inserted.
<Fig. 9> Fig. 9 is a graph showing the dependence of the magnetization on the amount of hydrogen inserted.
<Fig. 10> Fig. 10 is a graph showing the dependence of the Curie temperature on the replacement ratio of an Fe element with a Cr element, Mn element, Co element, or Ni element.
<Fig. 11> Fig. 11 is a graph showing the dependence of the magnetization on the replacement ratio of an Fe element with a Cr element, Mn element, Co element, or Ni element.
<Fig. 12> Fig. 12 is a graph showing the dependence of the Curie temperature and the entropy change on the Fe element replacement ratio, the graph being obtained in an experiment.
<Fig. 13> Fig. 13 is a graph showing the dependence of the Curie temperature on the Co element replacement ratio when an Fe element is replaced with a Co element.
<Fig. 14> Fig. 14 is a graph showing the dependence of the magnetization on the Co element replacement ratio when an Fe element is replaced with a Co element.
<Fig. 15> Fig. 15 is a graph showing the dependence of the Curie temperature on the Ba element replacement ratio when a Si element is replaced with another element of group 13, 14, or 15.
<Fig. 16> Fig. 16 is a graph showing the dependence of the magnetization on the Ba element replacement ratio when a Si element is replaced with another element of group 13, 14, or 15.
<Fig. 17> Fig. 17 is a graph showing the entropy change and the Curie temperature when a La element is not replaced.
<Fig. 18> Fig. 18 is a graph showing the entropy change and the Curie temperature when a La element is replaced with a Ba element.
<Fig. 19> Fig. 19 is a graph showing the entropy change and the Curie temperature when a La element is replaced with a Sr element.
<Fig. 20> Fig. 20 is a graph showing the entropy change and the Curie temperature when a La element is replaced with a Rb element.
<Fig. 21> Fig. 21 is a graph showing the entropy change and the Curie temperature when a La element is replaced with a Cs element.
<Fig. 22> Fig. 22 is a graph showing the results of an evaluation of stability by the replacement of a La element.
<Fig. 23> Fig. 23 is a graph showing a change in the Curie temperature after hydrogen insertion.
<Fig. 24> Fig. 24 is a graph showing the results of an evaluation of stability by hydrogen insertion.
<Fig. 25> Fig. 25 is a graph showing the results of a producibility evaluation.

## DESCRIPTION OF EMBODIMENTS

A unit, a temperature control module, and a temperature control apparatus according to the present embodiment will be described below with reference to examples.

(1) Unit

A unit includes a first alloy and a second alloy. The second alloy has a composition different from that of the first alloy. A Curie temperature which is a phase transition temperature of the first alloy is preferably different from a Curie temperature which is a phase transition temperature of the second alloy. The phase transition temperature of the second alloy may be higher or lower than the phase transition temperature of the first alloy.

The unit can be used for, for example, cooling or heating an object to be temperature-controlled by obtaining a magnetocaloric effect by changing the magnetic entropy in the first alloy and the second alloy. The unit may cool or heat the object to be temperature-controlled via a heat medium. The first alloy and the second alloy generate heat when a magnetic field is applied. The first alloy and the second alloy absorb heat when the application of the magnetic field is stopped to remove the magnetic field.

The first alloy and the second alloy are preferably arranged alongside one another, more preferably arranged in thermal contact with one another, more preferably arranged in direct physical contact with one another. This enables the efficiency to be increased when the unit is used as an AMR (Active Magnetic Regenerative) module.

(1-1) First alloy

The first alloy has a structure in which, in the crystal structure of a $La(Fe,Si)_{13}$-based alloy, the lanthanum element position is replaced with a group 1 element other than hydrogen or a group 2 element. The first alloy is preferably an alloy having a $NaZn_{13}$-type crystal structure as a main phase. In the crystal structure of the $La(Fe,Si)_{13}$-based alloy serving as the first alloy, at least part of the lanthanum element may be replaced, and the replacement ratio can be determined according to the intended phase transition temperature and the amount of entropy change. As described above, since the first alloy has a portion in which the phase transition temperature is controlled using a method other than the method using hydrogen atoms, even if the first alloy receives a physical stimulus or a chemical stimulus, the crystal structure is easily stably maintained. In addition, it is possible to suppress a decrease in the amount of magnetic entropy change, which may occur when iron atoms in the crystal of the first alloy are replaced with cobalt atoms, and the amount of magnetic entropy change of the crystal before the replacement is easily increased. Note that the larger the size of the element that replaces the lanthanum element is than the size of the lanthanum element, the more the phase transition temperature can be increased.

The first alloy has a structure in which, in the crystal structure of the $La(Fe,Si)_{13}$-based alloy, the lanthanum element position is replaced with a group 1 element other than hydrogen or a group 2 element, and hydrogen atoms may be further inserted between the crystal lattices by hydrogenation. When hydrogen atoms are introduced into the first alloy, the composition ratio of the hydrogen atoms in the first alloy is preferably 1.0 or less, more preferably 0.5 or less. This suppresses the separation into two phases with different phase transition temperatures due to the movement of the hydrogen atoms in the first alloy and can stabilize the phase transition temperature.

The first alloy may have a structure in which, in the crystal structure of the $La(Fe,Si)_{13}$-based alloy, the iron element is replaced with a cobalt element. The degree of replacement of the iron element with the cobalt element can be determined according to the desired phase transition temperature and the amount of entropy change. The amount of magnetic entropy change decreases due to the replacement of the iron element with the cobalt element, and, from the viewpoint of reducing the degree of decrease, the composition ratio of the cobalt element to the iron element in the first alloy is preferably 0.3 or less.

The first alloy may have a structure in which, in the crystal structure of the $La(Fe,Si)_{13}$-based alloy, the silicon element is replaced with at least one element selected from the group consisting of aluminum, carbon, germanium, gallium, phosphorus, and arsenic. Even for an alloy in which the phase transition temperature and the amount of entropy change are controlled by replacing the silicon element with these elements as described above, the phase transition temperature and the amount of entropy change can be further controlled according to the replacement ratio of the La element.

The first alloy may have, in the crystal structure of the $La(Fe,Si)_{13}$-based alloy, a structural portion in which the lanthanum element position is replaced with a group 1 element other than hydrogen and a structural portion in which the lanthanum element is replaced with a group 2 element.

In the first alloy, the lanthanum element position in the crystal structure of the $La(Fe,Si)_{13}$-based alloy is preferably replaced with an element which is a group 1 element or a group 2 element and is an element of the fifth period or the sixth period. This makes it possible to increase the amount of magnetic entropy change in the crystal of the first alloy as compared with that before the replacement of the lanthanum element.

Since alkaline-earth metals are more stable than alkali metals and barium is more stable than strontium, a barium element is preferably used at the highest ratio as the element that replaces the lanthanum element in the first alloy, and the replacement may be performed using only a barium element.

The phase transition temperature of the first alloy described above can be set to a temperature according to the use of an object to be temperature-controlled and is preferably, for example, 270K or higher and 310K or lower.

(1-2) Second alloy

The second alloy has a structure in which, in the crystal structure of a $La(Fe,Si)_{13}$-based alloy, the lanthanum element position is replaced with a group 1 element other than hydrogen or a group 2 element. The second alloy is preferably an alloy having a $NaZn_{13}$-type crystal structure as a main phase. In the crystal structure of the $La(Fe,Si)_{13}$-based alloy serving as the second alloy, at least part of the lanthanum element may be replaced, and the replacement ratio can be determined according to the intended phase transition temperature and the amount of entropy change. As described above, since the second alloy has a portion in which the phase transition temperature is controlled using a method other than the method using hydrogen atoms, even if the second alloy receives a physical stimulus or a chemical stimulus, the crystal structure is easily stably maintained. In addition, it is possible to suppress a decrease in the amount of magnetic entropy change, which may occur when iron atoms in the crystal of the first alloy are replaced with cobalt atoms, and the amount of magnetic entropy change of the crystal before the replacement is easily increased.

The second alloy has a structure in which, in the crystal structure of the $La(Fe,Si)_{13}$-based alloy, the lanthanum element position is replaced with a group 1 element other than hydrogen or a group 2 element, and hydrogen atoms may be further inserted between the crystal lattices by hydrogenation. When hydrogen atoms are introduced into the second alloy, the composition ratio of the hydrogen atoms in the second alloy is preferably 1.0 or less, more preferably 0.5 or less. This suppresses the separation into two phases with different phase transition temperatures due to the movement of the hydrogen atoms in the second alloy and can stabilize the phase transition temperature.

The second alloy may have a structure in which, in the crystal structure of the $La(Fe,Si)_{13}$-based alloy, the iron element is replaced with a cobalt element. The degree of replacement of the iron element with the cobalt element can be determined according to the desired phase transition temperature and the amount of entropy change. The amount of magnetic entropy change decreases due to the replacement of the iron element with the cobalt element, and, from the viewpoint of reducing the degree of decrease, the composition ratio of the cobalt element to the iron element in the second alloy is preferably 0.3 or less.

The second alloy may have a structure in which, in the crystal structure of the $La(Fe,Si)_{13}$-based alloy, the silicon element is replaced with at least one element selected from the group consisting of aluminum, carbon, germanium, gallium, phosphorus, and arsenic. Even for an alloy in which the phase transition temperature and the amount of entropy change are controlled by replacing the silicon element with these elements as described above, the phase transition temperature and the amount of entropy change can be further controlled according to the replacement ratio of the La element.

The second alloy may have, in the crystal structure of the $La(Fe,Si)_{13}$-based alloy, a structural portion in which the lanthanum element position is replaced with a group 1 element other than hydrogen and a structural portion in which the lanthanum element is replaced with a group 2 element other than hydrogen.

In the second alloy, the lanthanum element position in the crystal structure of the $La(Fe,Si)_{13}$-based alloy is preferably replaced with an element which is a group 1 element or a group 2 element and is replaced with an element of the fifth period or the sixth period. This makes it possible to increase the amount of magnetic entropy change in the crystal of the second alloy as compared with that before the replacement of the lanthanum element.

Since alkaline-earth metals are more stable than alkali metals and barium is more stable than strontium, a barium element is preferably used at the highest ratio as the element that replaces the lanthanum element in the second alloy, and the replacement may be performed using only a barium element.

The phase transition temperature of the second alloy is preferably different from the phase transition temperature of the first alloy, can be set to a temperature depending on the use of an object to be temperature-controlled, and is preferably, for example, 270K or higher and 310K or lower.

(1-3) Production of alloy in magnetic material

The method for producing the first alloy and the second alloy is not limited, and, for example, the first alloy and the second alloy may be produced through a step 1 of powder mixing and a step 2 of sintering treatment described below.

In the step 1, a $La(Fe,Si)_{13}$-based alloy powder having the $NaZn_{13}$-type crystal structure as a main phase, and a powder containing an element Ae of group 1 or group 2 in the fourth period or the fifth period are mixed at a stoichiometric ratio according to a desired composition to prepare a mixed powder A.

In the step 2, the mixed powder A is subjected to sintering treatment in a reducing atmosphere near the melting point of the powder containing Ae. Note that Intermetallics vol. 20, 2012, pp. 160-169 has reported that a LaFeSi alloy can be decomposed into iron having bcc as a main phase and a LaFeSi compound by a peritectic reaction when the temperature is raised to a peritectic temperature or higher. Accordingly, homogenization is preferably performed at 1, 120°C or lower.

(1-4) Method for identifying alloy in magnetic material

As a method for identifying a magnetic material, the measurement of a lattice spacing by XRD (X-ray diffraction) enables a crystal phase to be identified.

In addition, the observation of a backscattered electron image of a surface of an alloy by SEM (Scanning Electron Microscopy) enables portions having different crystal phases to be distinguished from each other.

Furthermore, as a method using an electron beam, EPMA (Electron Probe Micro Analyzer) or EDX (Energy dispersive X-ray spectroscopy) enables the distribution of elements on a surface or a cross section to be analyzed.

(2) Temperature control module

A temperature control module of the present embodiment includes the unit described above and a magnetic field applicator.

The magnetic field applicator can change a magnetic field applied to the unit. The magnetic field applicator has a magnetic circuit or the like and has a portion positioned on one side and a portion positioned on the other side with respect to the magnetic material having the first alloy and the second alloy in the unit.

The magnetic field applicator can switch between a state in which a magnetic field is applied to the magnetic material of the unit and a state in which no magnetic field is applied. In addition, the magnetic field applicator may be capable of performing a process of strengthening the magnetic field applied to the magnetic material and a process of weakening the magnetic field without making the magnetic field zero.

Such a temperature control module can be configured, for example, as a temperature control module 1 illustrated in Fig. 1.

The temperature control module 1 includes a magnetic material 10 having a first alloy 11 and a second alloy 12 and a magnetic field applicator 30. The first alloy 11 and the second alloy 12 are disposed, for example, so as to be in contact with each other. The magnetic field applicator 30 has a portion positioned on one side with respect to the magnetic material 10 and a portion positioned on the other side, can apply a magnetic field to the magnetic material 10, and can also remove the magnetic field by stopping the application of the magnetic field.

(3) Temperature control apparatus

A temperature control apparatus of the present embodiment includes the temperature control module described above, a heat medium, and a heat medium moving device.

The heat medium is used in thermal contact with the unit included in the temperature control module. The heat medium may be, for example, a fluid such as a refrigerant.

The heat medium moving device relatively moves the heat medium with respect to the unit included in the temperature control module. The heat medium moving device is not limited, may be configured by pistons provided on both sides of the heat medium, or may be configured by a pump provided in a closed circuit.

Such a temperature control apparatus can be configured, for example, as a temperature control apparatus 100 illustrated in Fig. 2.

The temperature control apparatus 100 includes a temperature control module 1, a heat medium moving circuit 60, a high-temperature-side circuit 40, and a low-temperature-side circuit 50.

The temperature control module 1 includes a magnetic material 10 and a magnetic field applicator 30 as described above. The magnetic material 10 has, for example, a first alloy 11, a second alloy 12, a third alloy 13, and a fourth alloy 14. The first alloy 11, the second alloy 12, the third alloy 13, and the fourth alloy 14 are formed of alloys having higher phase transition temperatures in this order. The first alloy 11, the second alloy 12, the third alloy 13, and the fourth alloy 14 are arranged side by side in descending order of the phase transition temperature. The magnetic field applicator 30 can apply a magnetic field to all of the first alloy 11, the second alloy 12, the third alloy 13, and the fourth alloy 14 included in the magnetic material 10 and weaken or stop the applied magnetic field to remove the magnetic field.

The magnetic material 10 may have at least two types of alloys, and the shape and the arrangement thereof are not limited. For example, as illustrated in Fig. 3, the magnetic material 10 may have a first alloy 11 having a stripe-shaped recess in an upper portion and a second alloy 12 having a stripe-shaped recess in an upper portion in the same manner, and the first alloy 11 and the second alloy 12 may be arranged such that the recesses are continuous. Alternatively, for example, in the magnetic material 10, as illustrated in Fig. 4, many alloys of three or more may be arranged, or such alloys may be arranged in parallel to each other. The method for making the first alloy 11 and the second alloy 12 adjacent to each other is not limited, and, for example, after magnetic substances are crushed, the crushed magnetic substances may be put into a mold having a partition, and the partition may then be removed, followed by pressing.

The heat medium moving circuit 60 includes a tank 62, a heat medium pump 63, and a heat medium flow path 61 that connects the tank 62 and the heat medium pump 63 together, and a heat medium is sealed therein. The magnetic material 10 may be disposed inside the tank 62 or may be disposed outside the tank 62 such that the heat medium inside the tank 62 and the magnetic material 10 are in thermal contact with each other. The tank 62 has a high-temperature storage section 62a on the high-temperature side with respect to the magnetic material 10 and a low-temperature storage section 62b on the low-temperature side with respect to the magnetic material 10. In the magnetic material 10, alloys having a higher phase transition temperature are positioned on the side of the high-temperature storage section 62a, and alloys having a lower phase transition temperature are positioned on the side of the low-temperature storage section 62b. When a magnetic field is applied to the magnetic material 10 from the magnetic field applicator 30 and the heat medium is heated by heat radiated from the magnetic material 10, the heat medium pump 63 is driven so as to move the heat medium to the high-temperature side with respect to the magnetic material 10. As a result, the heat medium which has been turned into a high-temperature heat medium is stored in the high-temperature storage section 62a. When the magnetic field applicator 30 stops the application of the magnetic field to the magnetic material 10 to remove the magnetic field, the magnetic material 10 takes heat from the heat medium to absorb heat. When the temperature of the heat medium decreases, the heat medium pump 63 is driven so as to move the heat medium to the low-temperature side with respect to the magnetic material 10. As a result, the heat medium which has been turned into a low-temperature heat medium is stored in the low-temperature storage section 62b. By repeating the movement of the heat medium and the application and removal of the magnetic field described above, the high-temperature heat medium is collected in the high-temperature storage section 62a, and the low-temperature heat medium is collected in the low-temperature storage section 62b.

The high-temperature-side circuit 40 includes a high-temperature-side first heat exchanger 41, a high-temperature-side pump 44, a high-temperature-side second heat exchanger 42, and a high-temperature-side flow path 43 connecting these components together, and a high-temperature-side fluid such as a refrigerant or water circulates in the high-temperature-side circuit 40. The high-temperature-side first heat exchanger 41 is disposed in the high-temperature storage section 62a and performs heat exchange between the high-temperature-side fluid flowing inside the high-temperature-side first heat exchanger 41 and the high-temperature heat medium in the high-temperature storage section 62a. The high-temperature-side second heat exchanger 42 heats a temperature control target using a high temperature of the high-temperature-side fluid flowing therein. The temperature control target may be, for example, air, a fluid such as water, or a solid to be heated. The high-temperature-side flow path 43 connects the high-temperature-side first heat exchanger 41, the high-temperature-side pump 44, and the high-temperature-side second heat exchanger 42 together so that the high-temperature-side fluid can circulate therethrough. The high-temperature-side pump 44 is driven to circulate the high-temperature-side fluid in the high-temperature-side circuit 40.

The low-temperature-side circuit 50 includes a low-temperature-side first heat exchanger 51, a low-temperature-side pump 54, a low-temperature-side second heat exchanger 52, and a low-temperature-side flow path 53 connecting these components together, and a low-temperature-side fluid such as a refrigerant or water circulates in the low-temperature-side circuit 50. The low-temperature-side first heat exchanger 51 is disposed in the low-temperature storage section 62b and performs heat exchange between the low-temperature-side fluid flowing inside the low-temperature-side first heat exchanger 51 and the low-temperature heat medium in the low-temperature storage section 62b. The low-temperature-side second heat exchanger 52 cools a temperature control target using a low temperature of the low-temperature-side fluid flowing therein. The temperature control target may be, for example, air, a fluid such as water, or a solid to be cooled. The low-temperature-side flow path 53 connects the low-temperature-side first heat exchanger 51, the low-temperature-side pump 54, and the low-temperature-side second heat exchanger 52 together so that the low-temperature-side fluid can circulate therethrough. The low-temperature-side pump 54 is driven to circulate the low-temperature-side fluid in the low-temperature-side circuit 50.

<EXAMPLES>

(With regard to simulation method)

The amount of magnetic entropy change due to an element replacement was verified by the following simulation.

The following three techniques (a) to (c) were used as simulation methods.

(a) AkaiKKR

AkaiKKR is a technique for performing first-principles electronic state calculations based on the density functional theory using a Green's function and is also called Machikaneyama (refer to "Introduction to Computational Materials Design", Osaka University Press).

Specifically, AkaiKKR (Machikaneyama) is a program package for first-principles electronic state calculations based on the local-density approximation (LDA) or generalized gradient approximation (GGA) of the density functional method. AkaiKKR can easily calculate the electronic state of a metal, a semiconductor, a compound, or the like and is particularly useful as a first-principles calculation technique capable of handling alloys. Since the coherent potential approximation (CPA) is incorporated, AkaiKKR can handle not only ordinary ordered crystals but also disordered systems such as impurity systems, disordered substitutional alloys, and mixed crystals.

(b) HiLAPW

HiLAPW uses the FLAPW method, which is one of the first-principles electronic state calculation methods based on the density functional theory (refer to "Band Theory", Uchida Rokakuho Publishing Co., Ltd., written by Tamio Oguchi).

Specifically, HiLAPW is an application that implements a first-principles calculation technique based on an all-electron calculation method and a full-potential method called an FLAPW method. Since the FLAPW method is a full-potential method, the FLAPW method is known as a technique capable of determining energy most accurately and is a technique particularly suitable for the comparison of energy in the lattice.

(c) Monte Carlo simulation method

The Monte Carlo simulation method, which is a general method, uses values determined using AkaiKKR as magnetic interactions acting between magnetic atoms and uses the Potts model as a spin model. The evaluation of entropy is estimated from the Monte Carlo simulation method.

(Example 1) Evaluation of Curie temperature and magnetization by replacement of La element

For $La_{1-z}A_z(Fe_{0.85}Si_{0.15})_{13}$ obtained by replacing a La element in $La(Fe_{0.85}Si_{0.15})_{13}$ with an element A (A = Rb, Cs, Sr, or Ba) of group 1 or group 2, a dependence of a calculated Curie temperature and a dependence of a magnetization on a replacement ratio z, which are grasped by simulations, are shown in Figs. 5 and 6, respectively. Note that since the calculated values of the Curie temperature are meaningful in relative values, not absolute values but relative values are shown here (the same applies hereinafter).

Numerical data corresponding to Fig. 5 is shown in Table 1 below.

<Table 1>

| La replacement ratio z | $La_{1-z}Ba_z(Fe_{0.85}Si_{0.15})_{13}$ | $La_{1-z}Rb_z(Fe_{0.85}Si_{0.15})_{13}$ | $La_{1-z}Sr_z(Fe_{0.85}Si_{0.15})_{13}$ | $La_{1-z}Cs_z(Fe_{0.85}Si_{0.15})_{13}$ |
|---|---|---|---|---|
| 0 | 0 | 0 | 0 | 0 |
| 0.1 | 31 | 49 | 15 | 79 |
| 0.2 | 57 | 88 | 30 | 130 |
| 0.3 | 81 | 119 | 43 | 164 |
| 0.5 | 118 | 165 | 68 | 194 |
| 0.8 | 158 | 204 | 100 | 180 |
| 1 | 176 | 216 | 119 | 152 |

According to the above, it is preferable that the decrease in the magnetization be suppressed to be small in order to ensure the amount of entropy change.

(Comparative Example 1) Evaluation of Curie temperature and magnetization by hydrogen insertion

The Curie temperature can be controlled by interstitial insertion of a hydrogen element into a LaFeSi-based magnetocaloric effect material. For example, according to IEEJ Journal, Vol. 124, No. 7, 2004, the Curie temperature corresponding to x = 0 in the chemical formula is 200K, and the Curie temperature corresponding to x = 1.5 is 320K.

According to J. Mag. Mag. Mat. 321 (2009) 3571, as shown in Fig. 7, the insertion of hydrogen has been experimentally confirmed up to about x = 2.3 in the composition formula. According to J. Mag. Mag. Mat. 321 (2009) 3571, as shown in Fig. 7, the experimental results of hydrogen insertion show that the Curie temperature increases as the amount of hydrogen inserted increases, and the entropy decreases after hydrogen insertion.

In order to check the correspondence between the experimentally confirmed results and the calculation results from the simulation here, a change in the Curie temperature and a change in the magnetization of a $La(Fe_{0.88}Si_{0.12})_{13}H_x$ system in which hydrogen was inserted between lattices were calculated by the same technique as described above. Fig. 8 shows the change in the Curie temperature of the system in which hydrogen was inserted between lattices, and Fig. 9 shows the change in the magnetization thereof.

Numerical data corresponding to Fig. 8 is shown in Table 2 below.

<Table 2>

| Amount of hydrogen inserted x | Amount of change in Curie temperature |
|---|---|
| 0 | 0 |
| 0.25 | 31 |
| 0.5 | 57 |
| 0.75 | 78 |
| 1 | 101 |
| 1.25 | 119 |
| 1.5 | 126 |
| 1.75 | 128 |

(continued)

| Amount of hydrogen inserted x | Amount of change in Curie temperature |
|---|---|
| 2 | 126 |
| 2.25 | 124 |
| 2.5 | 104 |
| 2.75 | 110 |
| 3 | 114 |

As shown above, although the calculated values also started to fluctuate from the vicinity exceeding x = 2.3, which had been experimentally confirmed, the tendency shown by the simulation results corresponded to the tendency described in J. Mag. Mag. Mat. 321 (2009) 3571, and it was confirmed that the Curie temperature increased and the magnetization slightly decreased with the insertion of hydrogen.

(Comparative Example 2) Evaluation of Curie temperature and magnetization by replacement of (Fe,Si) site with Co element

Fig. 10 shows a change in the Curie temperature and Fig. 11 shows a change in the magnetization when an Fe element in $La(Fe_{0.85}Si_{0.15})_{13}$ was replaced with a T element (chromium, manganese, cobalt, or nickel) by performing the simulation in the same manner to obtain $La(Fe_{0.85-y}Si_{0.15}T_y)_{13}$. The results showed that the Curie temperature decreased except for cobalt. The results showed that, regarding the change in the magnetism, the magnetization decreased, and the amount of entropy change due to spin decreased. These results were consistent with the results confirmed in Japanese Unexamined Patent Application Publication No. 2008-150695.

Next, with regard to the Curie temperature control and the entropy change when the Fe element is replaced with the Co element, the calculation results from a simulation are compared with the experimental results reported by J. Mag. Mag. Mat. 321 (2009) 3571 and shown in Fig. 12. According to the experimental results, when the replacement ratio x in $La(Fe_{(11.8-x)/13}Co_{x/13}Si_{1.2/13})_{13}$ increases, the Curie temperature increases and the entropy decreases. Thus, it was confirmed that the calculation results from the simulation above corresponded to the experimental results.

(Example 2) Evaluation of dependences of Curie temperature and magnetization on Co element replacement ratio when Fe element is replaced with Co element

The dependences of the change in the Curie temperature and the magnetization on the Co element replacement ratio y by replacing the La element with an Ae (Ae = Ba, Sr, Rb, or Cs) element were verified by calculations using a simulation. Specifically, the simulation was performed for the cases where the replacement ratio z of the La element by Ba, Sr, or Rb was 100% and the case where the replacement ratio z of the La element by Cs was 50%. The dependences on the replacement ratio y of Co in the chemical formula $La_{1-z}Ae_z(Fe_{0.85-y}Co_ySi_{0.15})_{13}$ were verified. Fig. 13 shows the change in the Curie temperature, and Fig. 14 shows the change in the magnetization.

Numerical data corresponding to Fig. 13 is shown in Table 3 below.

<Table 3>

| Co replacement ratio y | $La(Fe_{0.85-y}Co_ySi_{0.15})_{13}$ | $Ba(Fe_{0.85-y}Co_ySi_{0.15})_{13}$ | $Sr(Fe_{0.85-y}Co_ySi_{0.15})_{13}$ | $Rb(Fe_{0.85-y}Co_ySi_{0.15})_{13}$ | $La_{0.5}Cs_{0.5}(Fe_{0.5-y}Co_ySi_{0.15})_{13}$ |
|---|---|---|---|---|---|
| 0.00 | 0 | 0 | 0 | 0 | 0 |
| 0.05 | | 27 | 26 | 33 | 19 |
| 0.10 | 34 | 45 | 44 | 57 | 1 |
| 0.15 | 44 | 57 | 56 | 72 | 13 |
| 0.20 | 50 | 64 | 62 | 83 | 22 |
| 0.25 | 54 | 68 | 66 | 89 | 28 |
| 0.30 | 55 | 69 | 66 | 92 | 30 |

According to the above, it was confirmed that as the Co replacement ratio increased, the Curie temperature increased except for Cs, and the magnetization decreased.

(Example 3) Evaluation of dependences of Curie temperature and magnetization on replacement ratio of La element with Ba element when Si element is replaced with another element of group 13, 14, or 15

For alloys in which 50% of the Si element was replaced with an A element (A = element of group 13, 14, or 15), the dependences of the Curie temperature and the magnetization on the Ba element replacement ratio were calculated by simulations. Specifically, for a chemical formula $La_{1-z}Ba_z(Fe_{0.85}Si_{0.075}A_{0.075})_{13}$, the changes in the Curie temperature and the magnetization with respect to the replacement ratio z of the Ba element were verified. Fig. 15 shows the change in the Curie temperature, and Fig. 16 shows the change in the magnetization.

Numerical data corresponding to Fig. 15 is shown in Tables 4 and 5 below.

<Table 4>

| La replacement ratio z | $La_{1-z}Ba_z(Fe_{0.85}Si_{0.15})_{13}$ | $La_{1-z}Ba_z(Fe_{0.85}Si_{0.075}Al_{0.075})_{13}$ | $La_{1-z}Ba_z(Fe_{0.85}Si_{0.075}B_{0.075})_{13}$ | $La_{1-z}Ba_z(Fe_{0.85}Si_{0.075}C_{0.075})_{13}$ |
|---|---|---|---|---|
| 0.0 | 0 | 0 | 0 | 0 |
| 0.1 | 30 | 41 | 65 | 59 |
| 0.2 | 57 | 75 | 118 | 110 |
| 0.3 | 80 | 104 | 168 | 153 |
| 0.5 | 118 | 149 | 251 | 218 |
| 0.8 | 157 | 195 | 324 | 285 |
| 1.0 | 175 | 216 | 357 | 316 |

<Table 5>

| La replacement ratio z | $La_{1-z}Ba_z(Fe_{0.85}Si_{0.075}Ga_{0.075})_{13}$ | $La_{1-z}Ba_z(Fe_{0.85}Si_{0.075}Ge_{0.075})_{13}$ | $La_{1-z}Ba_z(Fe_{0.85}Si_{0.075}P_{0.075})_{13}$ | $La_{1-z}Ba_z(Fe_{0.85}Si_{0.075}As_{0.075})_{13}$ |
|---|---|---|---|---|
| 0.0 | 0 | 0 | 0 | 0 |
| 0.1 | (No calculated value) | 26 | 26 | 28 |
| 0.2 | (No calculated value) | 49 | 48 | 53 |
| 0.3 | (No calculated value) | 69 | 68 | 74 |
| 0.5 | 129 | 101 | 100 | 109 |
| 0.8 | 170 | 135 | 133 | 145 |
| 1.0 | 188 | 150 | 148 | 161 |

According to the above, it was confirmed that when the Si element was replaced with an element of group 13, 14, or 15, as the replacement ratio of the La element with the Ba element increased, the Curie temperature tended to increase, and the magnetization tended to decrease after the increase.

(Comparative Example 3) Entropy change and Curie temperature of alloy in which La element is not replaced

Fig. 17 shows the calculation results from simulations of the entropy change and the Curie temperature determined as a temperature of a peak of $La(Fe_{0.85}Si_{0.15})_{13}$.

(Example 4) Entropy change and Curie temperature when La element is replaced with Ba element, Sr element, Rb element, or Cs element

Fig. 18, Fig. 19, Fig. 20, and Fig. 21 show calculation results from simulations of entropy changes and the Curie temperatures determined as temperatures of peaks when the La element was replaced with a Ba element, a Sr element, a Rb element, and a Cs element, respectively. It was confirmed that an entropy change was ensured in all of the alloys in which the La element was replaced with a Ba element, a Sr element, a Rb element, or a Cs element compared with the alloy in which the La element was not replaced.

(Example 5) Evaluation of stability by replacement of La element

IEEE TRANSACTIONS ON MAGNETICS, VOL. 47, NO. 10, OCTOBER 2011 has reported that the Curie temperature control by hydrogen insertion is accompanied by instability. Corresponding to this, as will be described later in Comparative Example 4, it was confirmed that the calculation results from the simulation were also accompanied by instability. This instability due to hydrogen insertion can be qualitatively understood as follows: hydrogen located between lattices easily moves, and when lattices having different sizes are adjacent to each other, hydrogen moves to a larger lattice.

Based on the above, mixing energy when the La element was replaced with the Ba element was calculated. The mixing energy was determined on the assumption of a state where the Ba element uniformly replaced over all the lattices and a case where the uniformly replacing Ba element moved between lattices as in the case of hydrogen to form a structure including lattices having a high replacement ratio with the Ba element and lattices having a low replacement ratio with the Ba element, and was calculated, as the difference in energy therebetween, by the following equation.

$$\Delta E = E[La_{(1-z)}Ba_z(Fe_{0.85}Si_{0.15})_{13}] - \{(1 - z)E[La(Fe_{0.85}Si_{0.15})_{13}] - zE[Ba(Fe_{0.85}Si_{0.15})_{13}]\}$$

Fig. 22 shows the calculation results from the simulation. According to the results, it was confirmed that since the mixing energy became negative, making a mixed state was more stable.

(Comparative Example 4) Evaluation of stability by hydrogen insertion

IEEE TRANSACTIONS ON MAGNETICS, VOL. 47, NO. 10, OCTOBER 2011 has reported that, as shown in Fig. 23, the Curie temperature Tc of a material in which hydrogen was inserted for controlling the Curie temperature changed after 35 days under certain conditions. This change in the Curie temperature is considered to be caused by the movement of hydrogen in the two-phase coexisting state.

In view of the above, the mixing energy of hydrogen before and after the movement of hydrogen was determined by calculations using the above simulation. Specifically, the mixing energy was calculated according to the following equation.

$$\Delta E = E(La(Fe_{0.88}Si_{0.12})_{13} \cdot H_x) - \{(1 - x/1.75)E(La(Fe_{0.88}Si_{0.12})_{13}) + E((x/1.75)La(Fe_{0.88}Si_{0.12})_{13} \cdot H_{1.75})\}$$

The calculation results from the simulation were as shown in Fig. 24, and the mixing energy of hydrogen was confirmed to be positive. Therefore, it was found that even when a mixed state was made, the mixed state was unstable and thus tended to be divided into lattices containing no hydrogen and lattices containing much hydrogen.

(Example 6) Evaluation of producibility based on simulation calculations

To evaluate producibility of alloys, the formation energy was calculated by simulation.

The formation energy $\Delta H(x)$ per atom is calculated as follows.

$$\Delta H(x) = 1/14\{E[La_{0.5}Ba_{0.5}(Fe_{(1-x/2)}Si_{x/2})_{13}] - 1/2E[La] - 1/2E[Ba] + (13 - x/2)E[Fe] + x/2E[Si]\}$$

The $\Delta H(x)$ was calculated by the HiLAPW method, and the results were as shown in Fig. 25. There are many possible arrangements, and all the arrangements were calculated. According to the results, it was confirmed that the formation energy was negative in stable arrangements in which x was 2 or more. Since the negative range indicates that the arrangement is more stable than the raw materials, the above results strongly suggest that the production can be performed. The results also show that even in the case where no Ba element is contained, a substance $LaFe_{13}$, which contains no Si element, cannot be formed. This point also coincides with the experimental fact.

As described above, according to the formation energy of LaBa(Fe,Si) crystals, it can be predicted that sufficiently stable crystals are obtained.

(Supplementary note)

The embodiments of the present disclosure have been described above, and it is to be understood that the forms and details can be variously changed without departing from the spirit and scope of the present disclosure described in the claims.

**REFERENCE SIGNS LIST**

1: temperature control module
10: magnetic material (unit)
11: first alloy
12: second alloy
13: third alloy
14: fourth alloy
30: magnetic field applicator
40: high-temperature-side circuit
41: high-temperature-side first heat exchanger
42: high-temperature-side second heat exchanger
43: high-temperature-side flow path
44: high-temperature-side pump
50: low-temperature-side circuit
51: low-temperature-side first heat exchanger
52: low-temperature-side second heat exchanger
53: low-temperature-side flow path
54: low-temperature-side pump
60: heat medium moving circuit
61: heat medium flow path
62: tank
62a: high-temperature storage section
62b: low-temperature storage section
63: heat medium pump (heat medium moving device)
100: temperature control apparatus

**CITATION LIST**

**PATENT LITERATURE**

PTL 1: Japanese Unexamined Patent Application Publication No. 2008-150695

**NON PATENT LITERATURE**

NPL 1: IEEE TRANSACTIONS ON MAGNETICS, VOL. 47, NO. 10, OCTOBER 2011

**Claims**

**1.** A unit (10) comprising:

a first alloy (11) having a structure in which, in a crystal structure of a $La(Fe,Si)_{13}$-based alloy, a lanthanum element position is replaced with a group 1 element other than hydrogen or a group 2 element; and
a second alloy (12) having a structure in which, in a crystal structure of a $La(Fe,Si)_{13}$-based alloy, a lanthanum element position is replaced with a group 1 element other than hydrogen or a group 2 element and having a composition different from that of the first alloy.

**2.** The unit according to Claim 1,
wherein the unit is capable of controlling a temperature of a temperature control target by causing a magnetic entropy change.

**3.** The unit according to Claim 1 or 2,
wherein a phase transition temperature of the first alloy and a phase transition temperature of the second alloy are different.

**4.** The unit according to any one of Claims 1 to 3,
wherein the first alloy and the second alloy are connected in a state of being arranged side by side.

**5.** The unit according to any one of Claims 1 to 4,

wherein the first alloy has a structure in which, in the crystal structure of the $La(Fe,Si)_{13}$-based alloy, a lanthanum element is replaced with an element selected from elements of the fifth period and the sixth period, and
the second alloy has a structure in which, in the crystal structure of the $La(Fe,Si)_{13}$-based alloy, a lanthanum element is replaced with an element selected from elements of the fifth period and the sixth period.

**6.** The unit according to any one of Claims 1 to 5,

wherein the first alloy has a structure in which, in the crystal structure of the $La(Fe,Si)_{13}$-based alloy, a lanthanum element is replaced with a group 1 element other than hydrogen and a structure in which the lanthanum element is replaced with a group 2 element, or
the second alloy has a structure in which, in the crystal structure of the $La(Fe,Si)_{13}$-based alloy, a lanthanum element is replaced with a group 1 element other than hydrogen and a structure in which the lanthanum element is replaced with a group 2 element.

**7.** The unit according to any one of Claims 1 to 6,

wherein the first alloy has a structure in which, in the crystal structure of the $La(Fe,Si)_{13}$-based alloy, an iron element is replaced with a cobalt element, or
the second alloy has a structure in which, in the crystal structure of the $La(Fe,Si)_{13}$-based alloy, an iron element is replaced with a cobalt element.

**8.** The unit according to any one of Claims 1 to 7,

wherein the first alloy has a structure in which, in the crystal structure of the $La(Fe,Si)_{13}$-based alloy, a silicon element is replaced with at least one element selected from the group consisting of aluminum, carbon, germanium, gallium, phosphorus, and arsenic, or
the second alloy has a structure in which, in the crystal structure of the $La(Fe,Si)_{13}$-based alloy, a silicon element is replaced with at least one element selected from the group consisting of aluminum, carbon, germanium, gallium, phosphorus, and arsenic.

**9.** A temperature control module (1) comprising:

the unit (10) according to any one of Claims 1 to 8; and
a magnetic field applicator (30) capable of changing a magnetic field applied to the unit.

**10.** A temperature control apparatus (100) comprising:

the temperature control module (1) according to Claim 9;
a heat medium used in thermal contact with the unit; and
a heat medium moving device (63) that moves the heat medium.

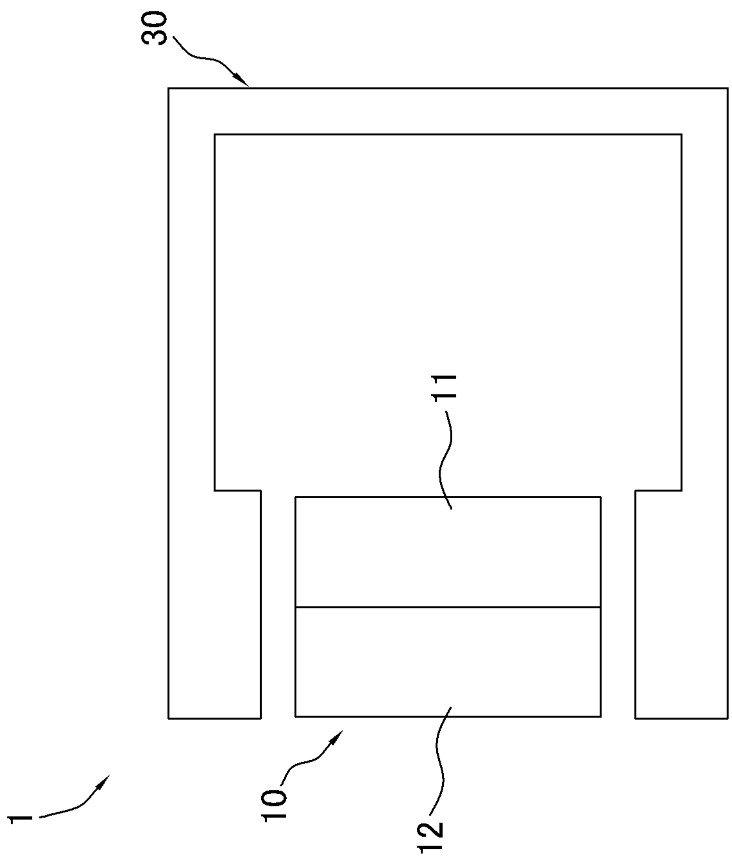


FIG. 1

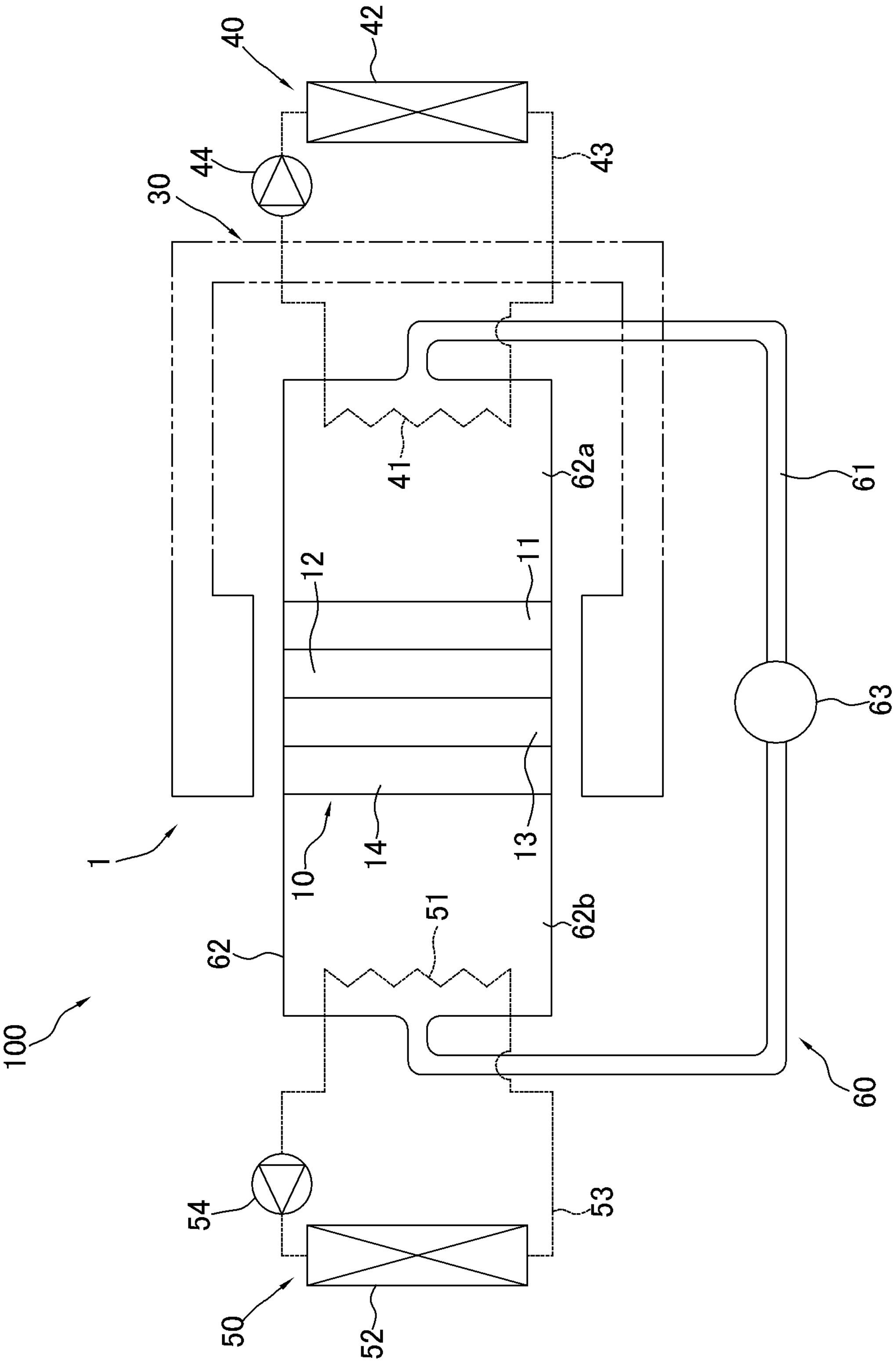
100
1
10
11
12
13
14
30
40
41
42
43
44
50
51
52
53
54
60
61
62
62a
62b
63

FIG. 2

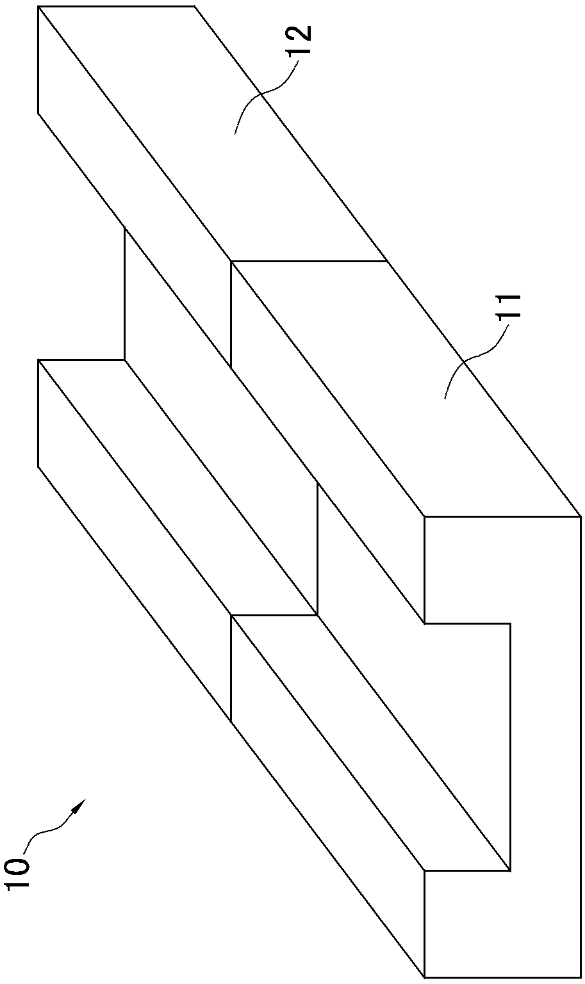


FIG. 3

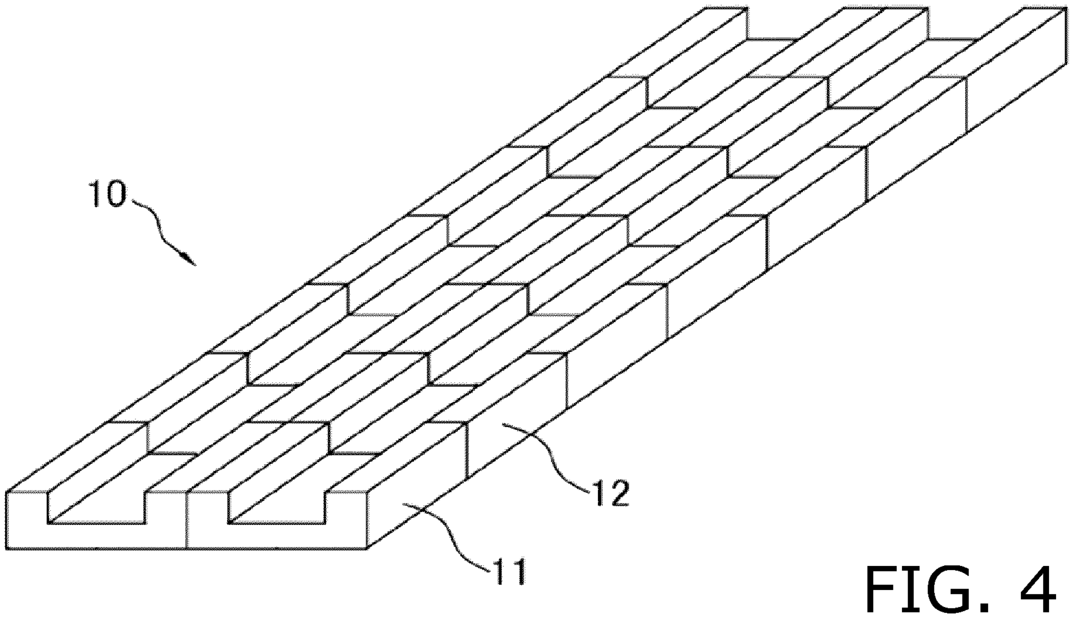
10
12
11

FIG. 4

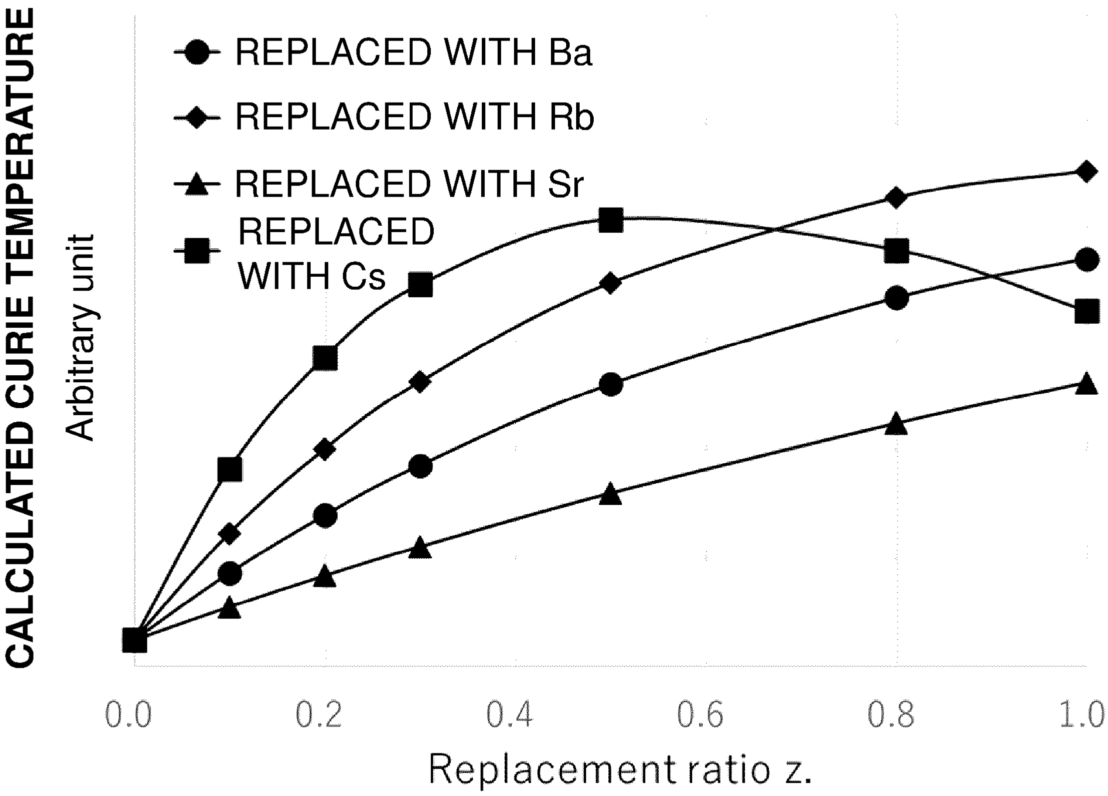
CALCULATED CURIE TEMPERATURE
Arbitrary unit
REPLACED WITH Ba
REPLACED WITH Rb
REPLACED WITH Sr
REPLACED WITH Cs
0.0
0.2
0.4
0.6
0.8
1.0
Replacement ratio z.

FIG. 5

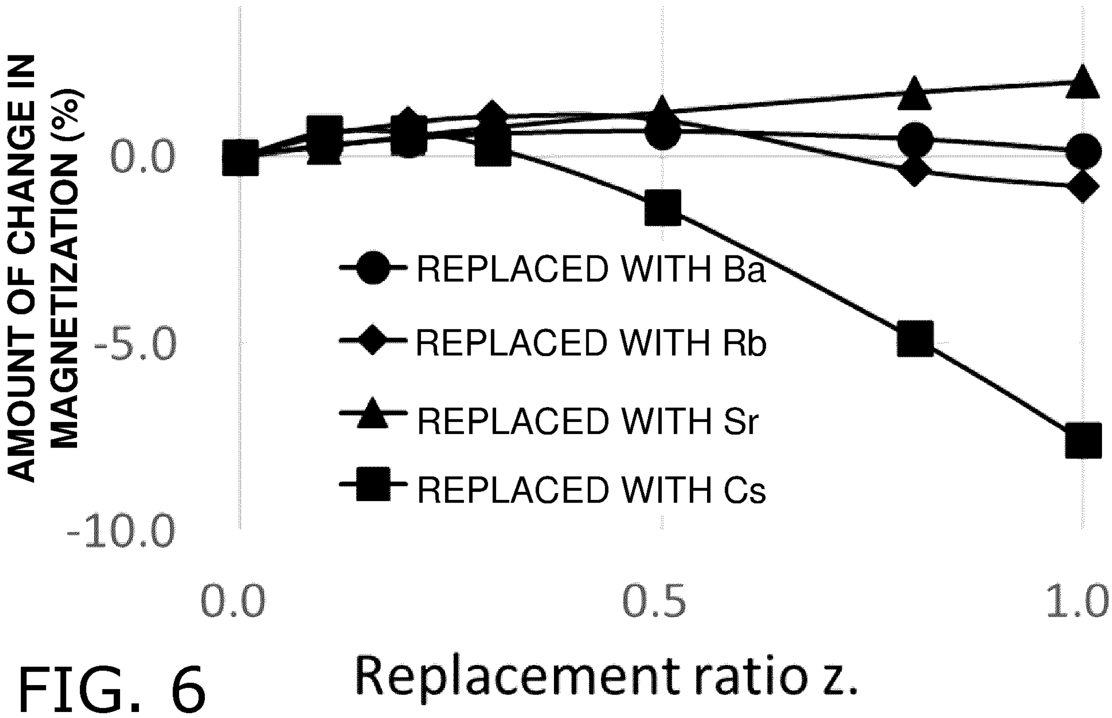
AMOUNT OF CHANGE IN MAGNETIZATION (%)
0.0
-5.0
-10.0
REPLACED WITH Ba
REPLACED WITH Rb
REPLACED WITH Sr
REPLACED WITH Cs
0.0
0.5
1.0
Replacement ratio z.

FIG. 6

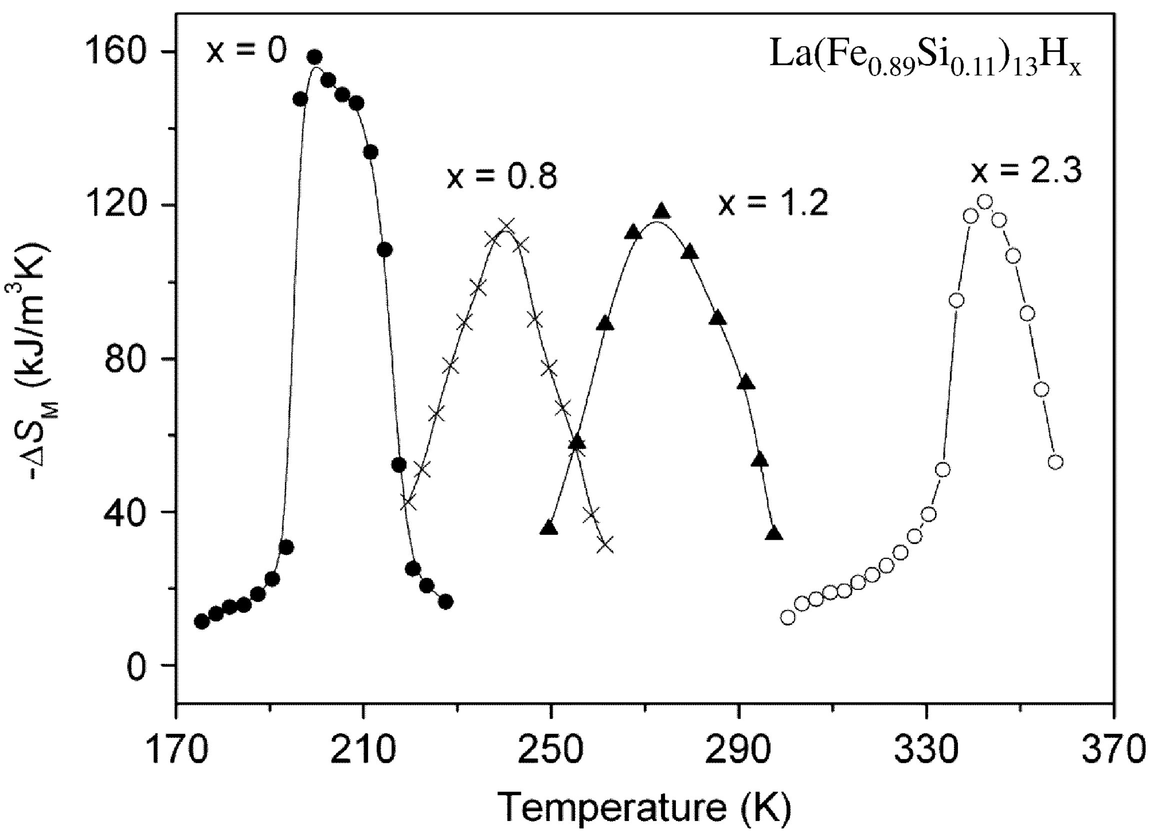
$La(Fe_{0.89}Si_{0.11})_{13}H_x$
x = 0
x = 0.8
x = 1.2
x = 2.3
$-\Delta S_M$ (kJ/m$^3$K)
0
40
80
120
160
170
210
250
290
330
370
Temperature (K)

FIG. 7

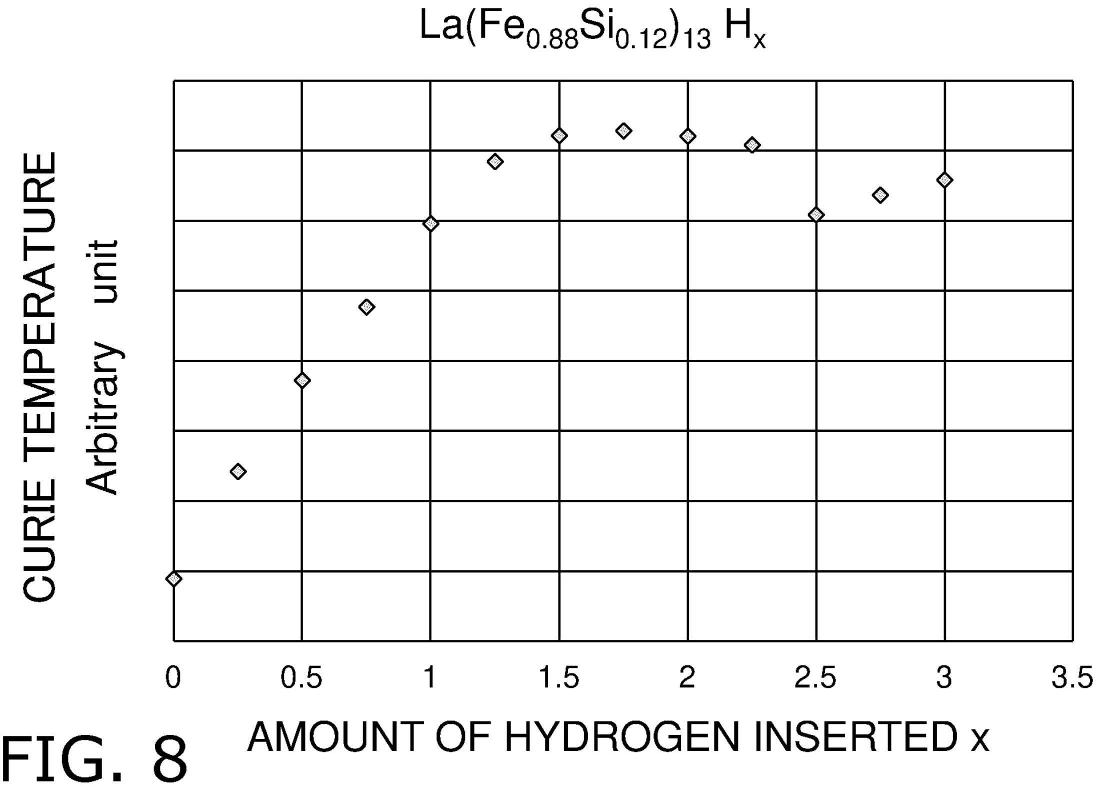
La(Fe0.88Si0.12)13 Hx
CURIE TEMPERATURE
Arbitrary unit
0
0.5
1
1.5
2
2.5
3
3.5
AMOUNT OF HYDROGEN INSERTED x

FIG. 8

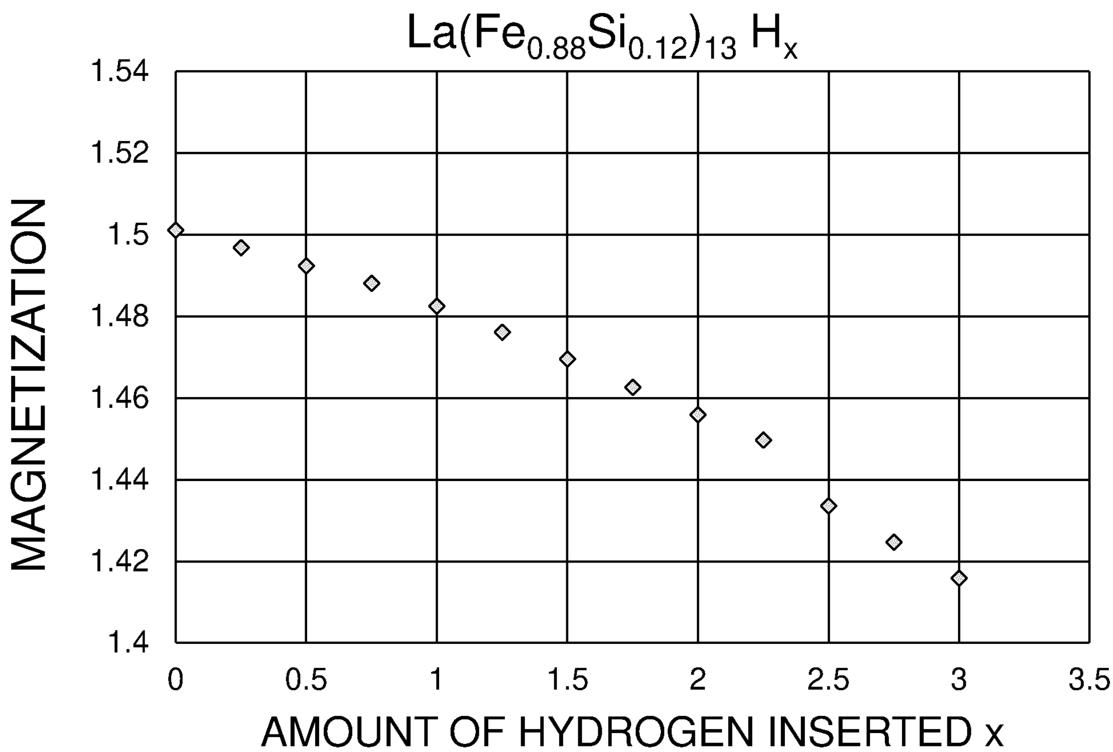
La(Fe0.88Si0.12)13 Hx
MAGNETIZATION
1.54
1.52
1.5
1.48
1.46
1.44
1.42
1.4
0
0.5
1
1.5
2
2.5
3
3.5
AMOUNT OF HYDROGEN INSERTED x

FIG. 9

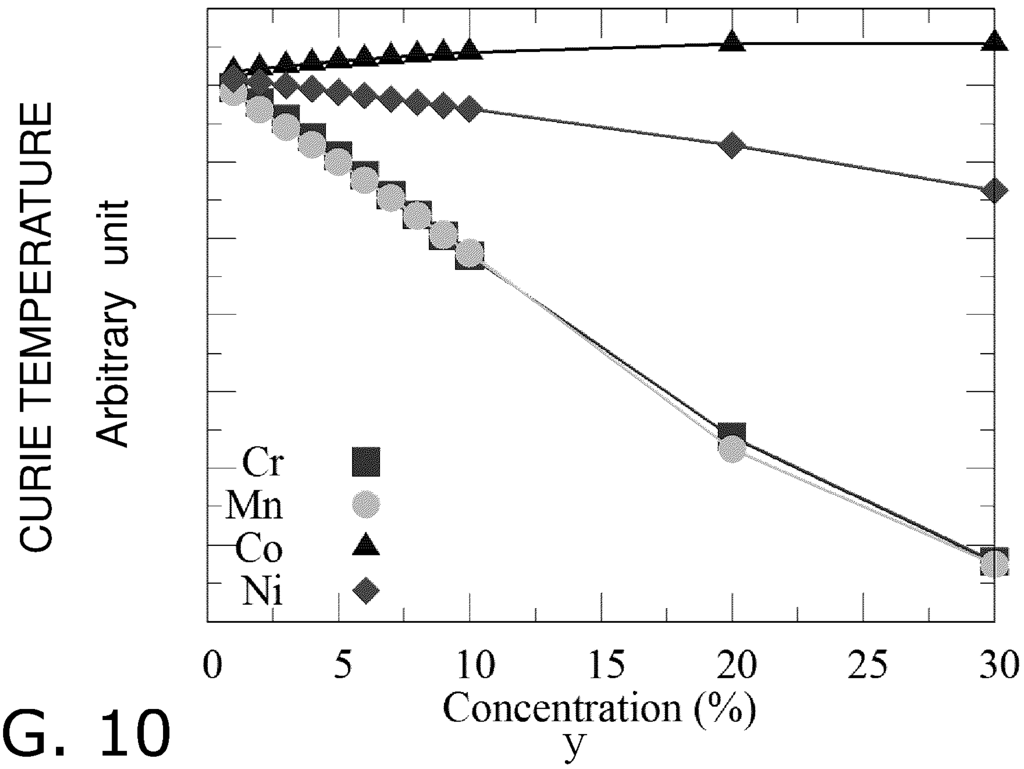
CURIE TEMPERATURE
Arbitrary unit
Cr
Mn
Co
Ni
0
5
10
15
20
25
30
Concentration (%)
y

FIG. 10

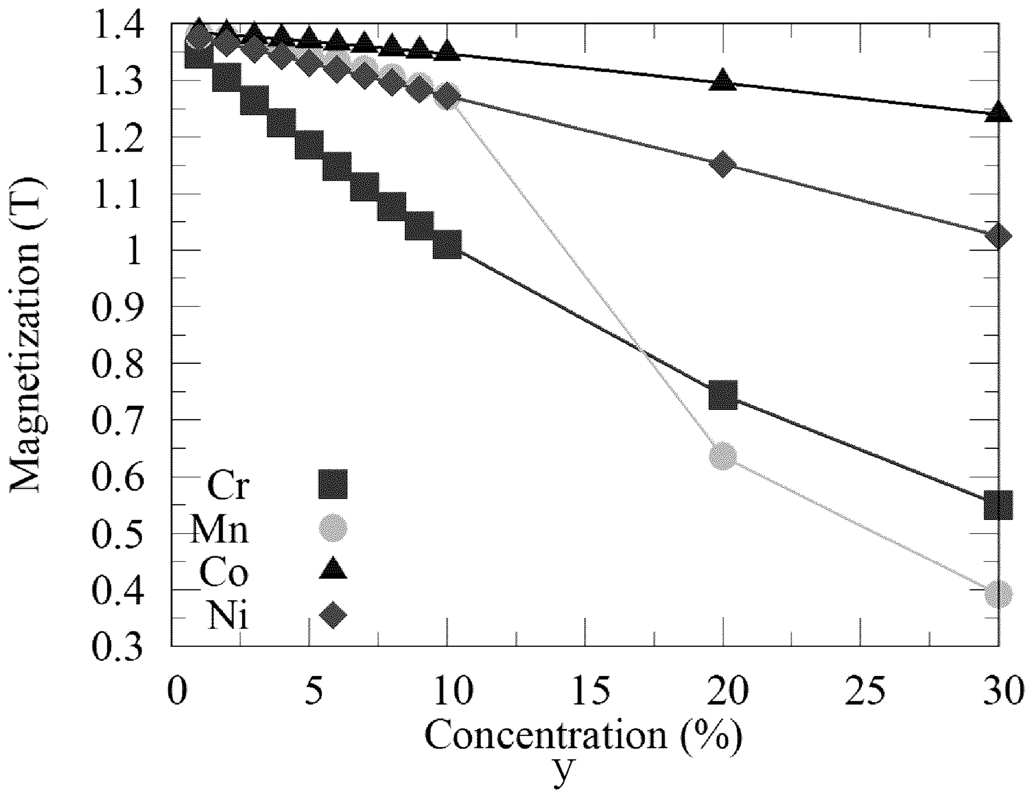
Magnetization (T)
1.4
1.3
1.2
1.1
1
0.9
0.8
0.7
0.6
0.5
0.4
0.3
Cr
Mn
Co
Ni
0
5
10
15
20
25
30
Concentration (%)
y

FIG. 11

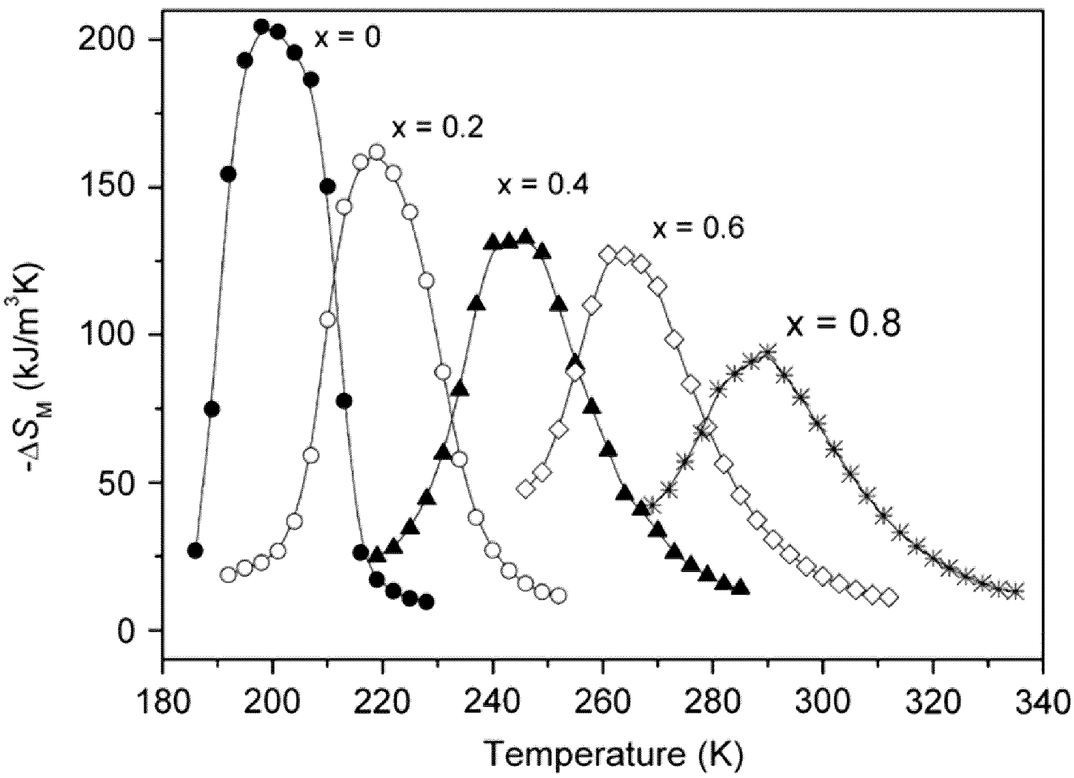
x = 0
x = 0.2
x = 0.4
x = 0.6
x = 0.8
200
150
100
50
0
$-\Delta S_M$ (kJ/m$^3$K)
180
200
220
240
260
280
300
320
340
Temperature (K)

FIG. 12

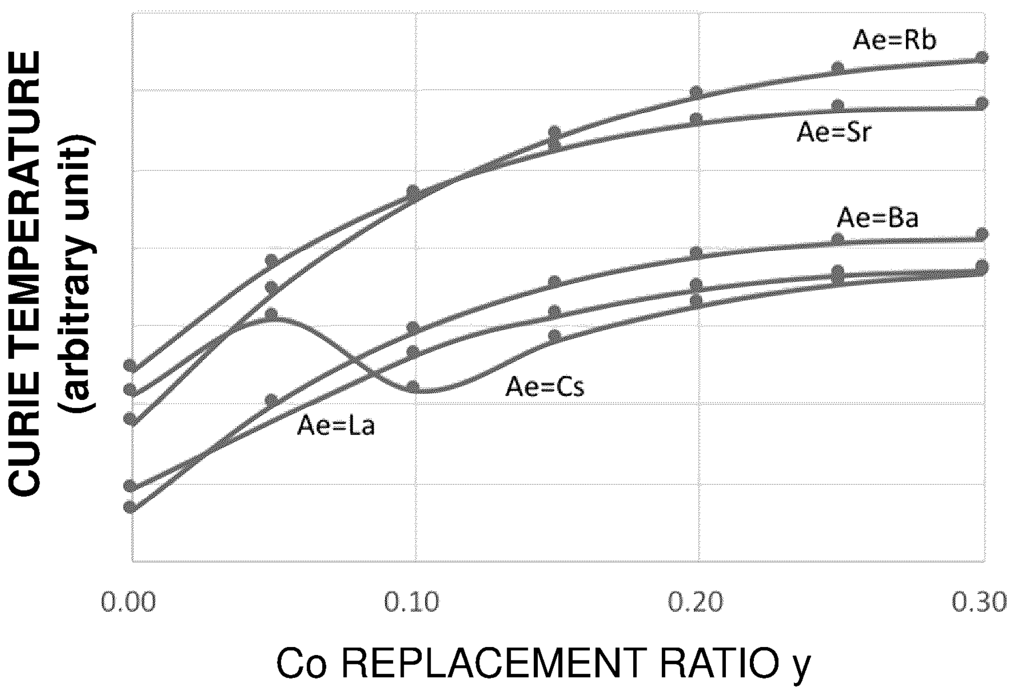
CURIE TEMPERATURE
(arbitrary unit)
Ae=Rb
Ae=Sr
Ae=Ba
Ae=Cs
Ae=La
0.00
0.10
0.20
0.30
Co REPLACEMENT RATIO y

FIG. 13

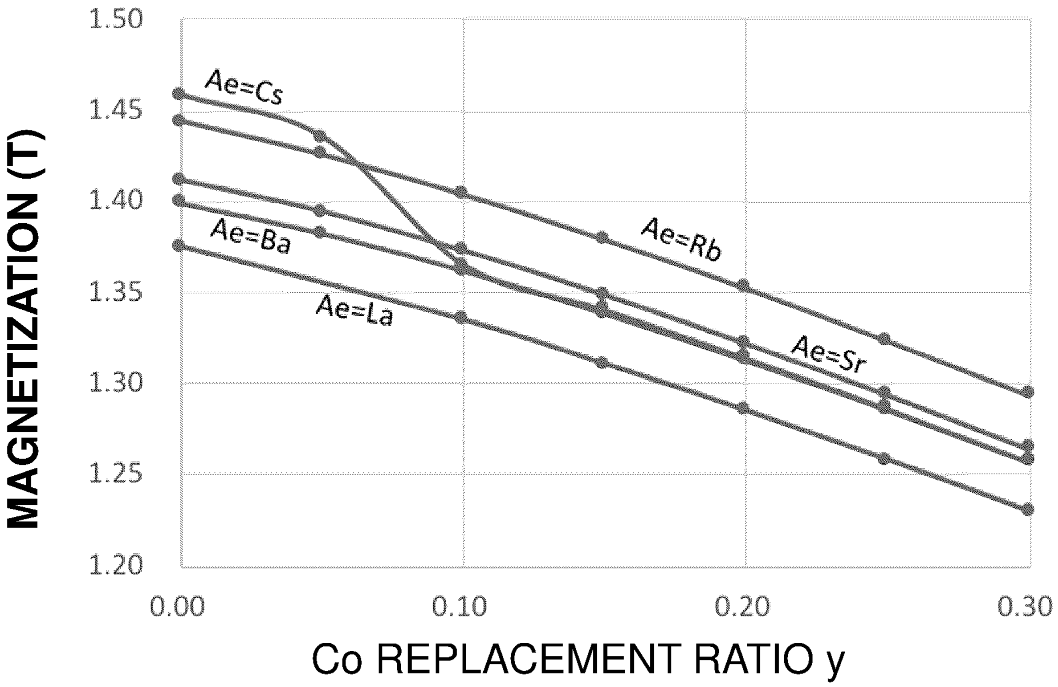
MAGNETIZATION (T)
1.50
1.45
1.40
1.35
1.30
1.25
1.20
Ae=Cs
Ae=Rb
Ae=Ba
Ae=La
Ae=Sr
0.00
0.10
0.20
0.30
Co REPLACEMENT RATIO y

FIG. 14

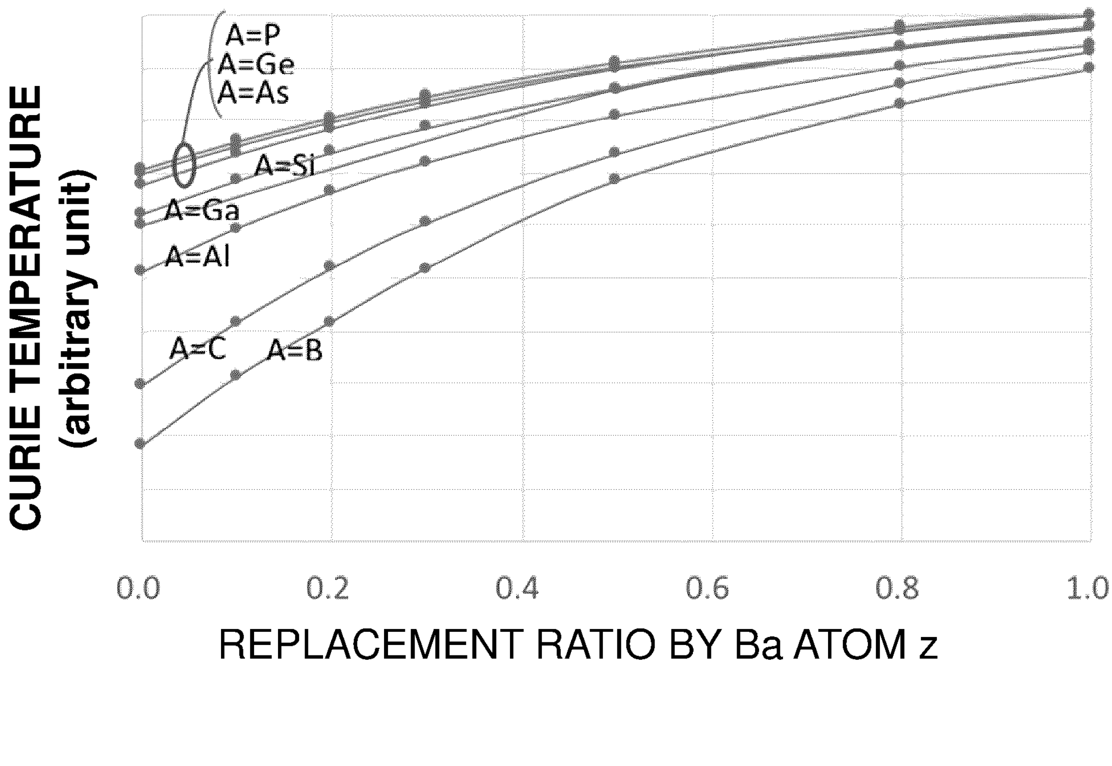
CURIE TEMPERATURE
(arbitrary unit)
A=P
A=Ge
A=As
A=Si
A=Ga
A=Al
A=C
A=B
0.0
0.2
0.4
0.6
0.8
1.0
REPLACEMENT RATIO BY Ba ATOM z

FIG. 15

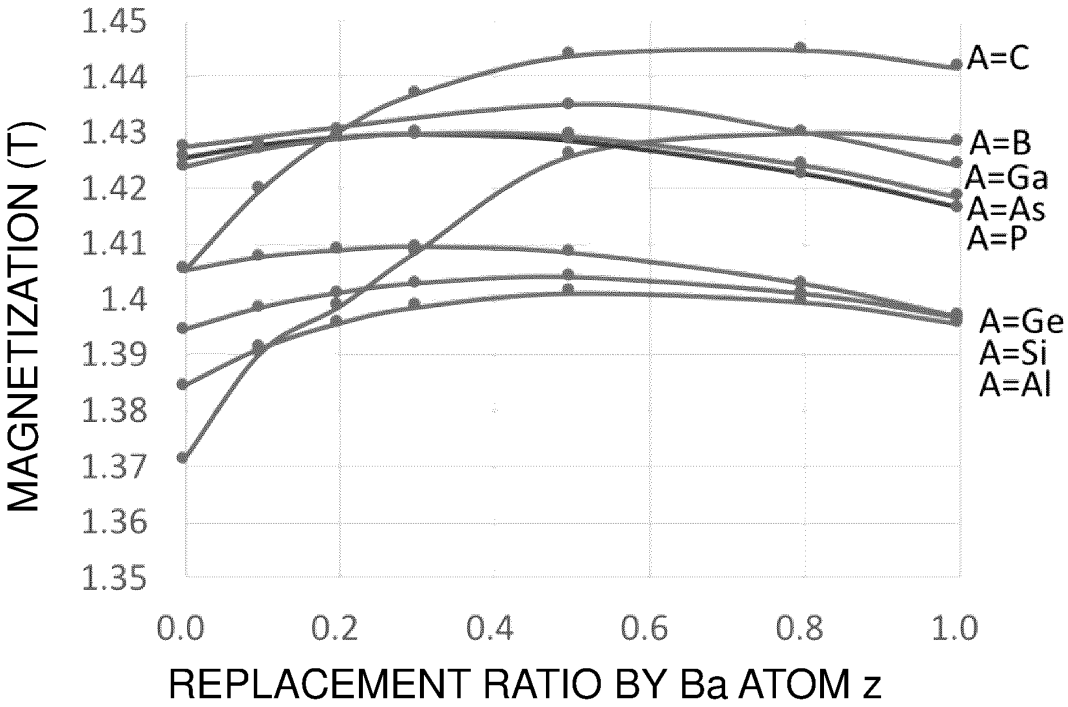

MAGNETIZATION (T)
1.45
1.44
1.43
1.42
1.41
1.4
1.39
1.38
1.37
1.36
1.35
0.0
0.2
0.4
0.6
0.8
1.0
REPLACEMENT RATIO BY Ba ATOM z
A=C
A=B
A=Ga
A=As
A=P
A=Ge
A=Si
A=Al


FIG. 16

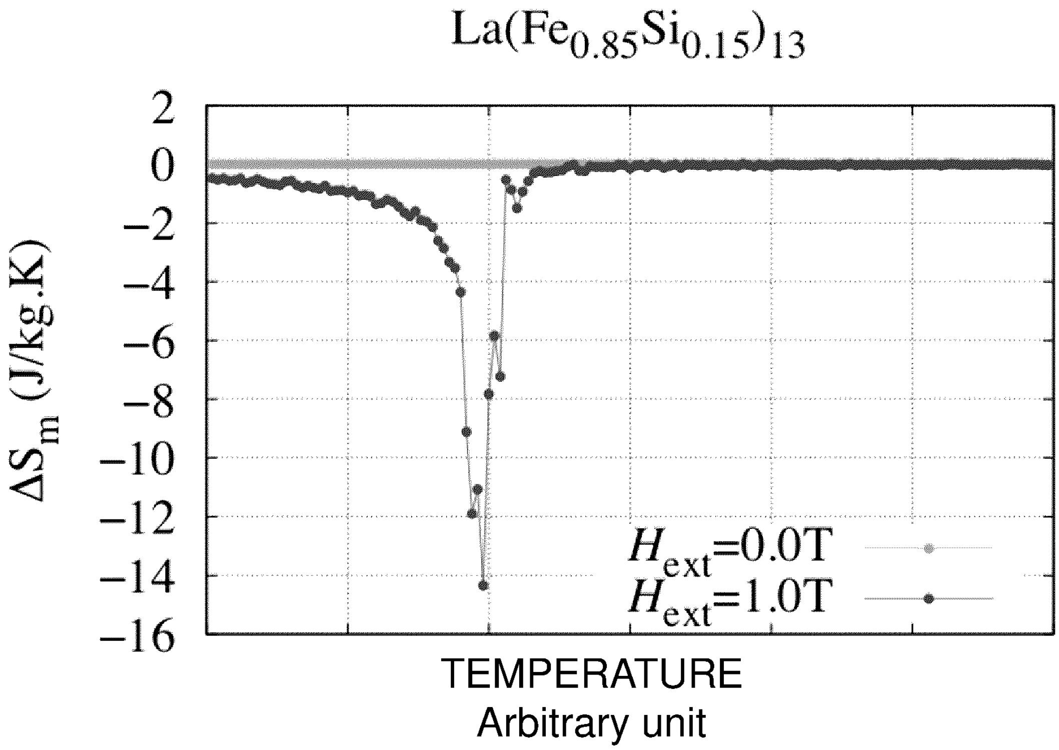

La(Fe0.85Si0.15)13
ΔSm (J/kg.K)
2
0
−2
−4
−6
−8
−10
−12
−14
−16
Hext=0.0T
Hext=1.0T
TEMPERATURE
Arbitrary unit


FIG. 17

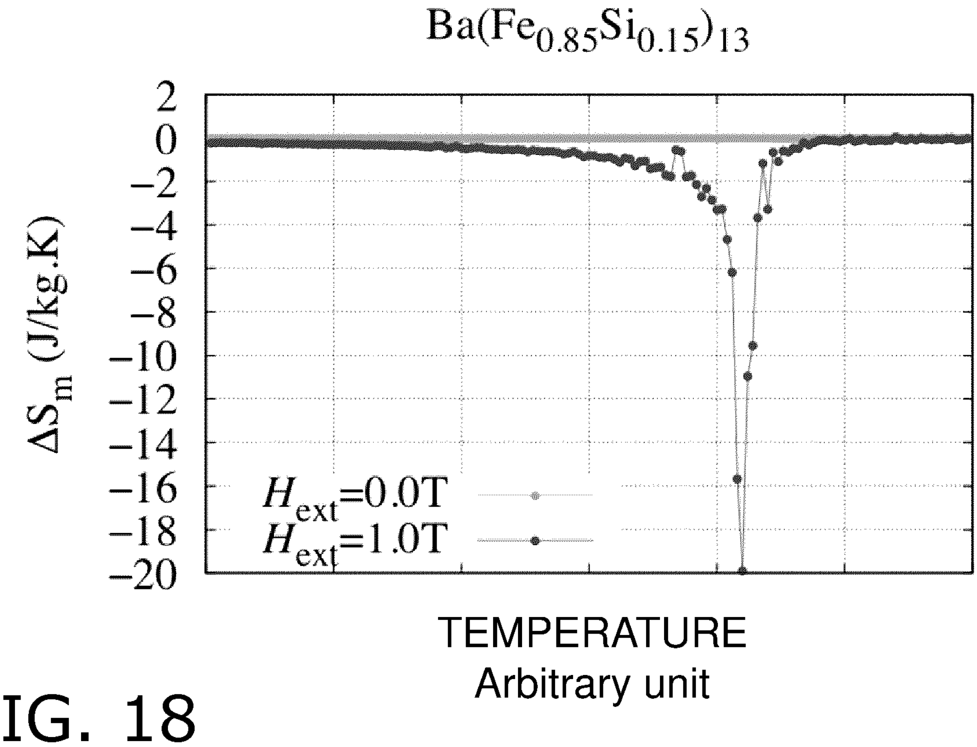
Ba(Fe0.85Si0.15)13
2
0
−2
−4
−6
−8
−10
−12
−14
−16
−18
−20
ΔSm (J/kg.K)
Hext=0.0T
Hext=1.0T
TEMPERATURE
Arbitrary unit

FIG. 18

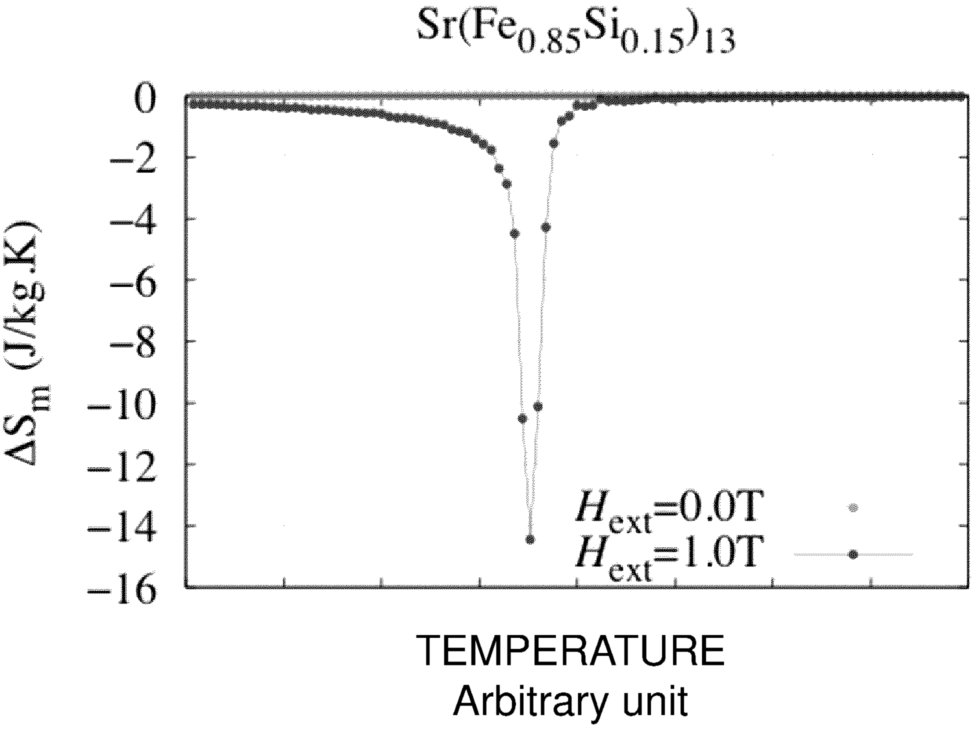
Sr(Fe0.85Si0.15)13
0
−2
−4
−6
−8
−10
−12
−14
−16
ΔSm (J/kg.K)
Hext=0.0T
Hext=1.0T
TEMPERATURE
Arbitrary unit

FIG. 19

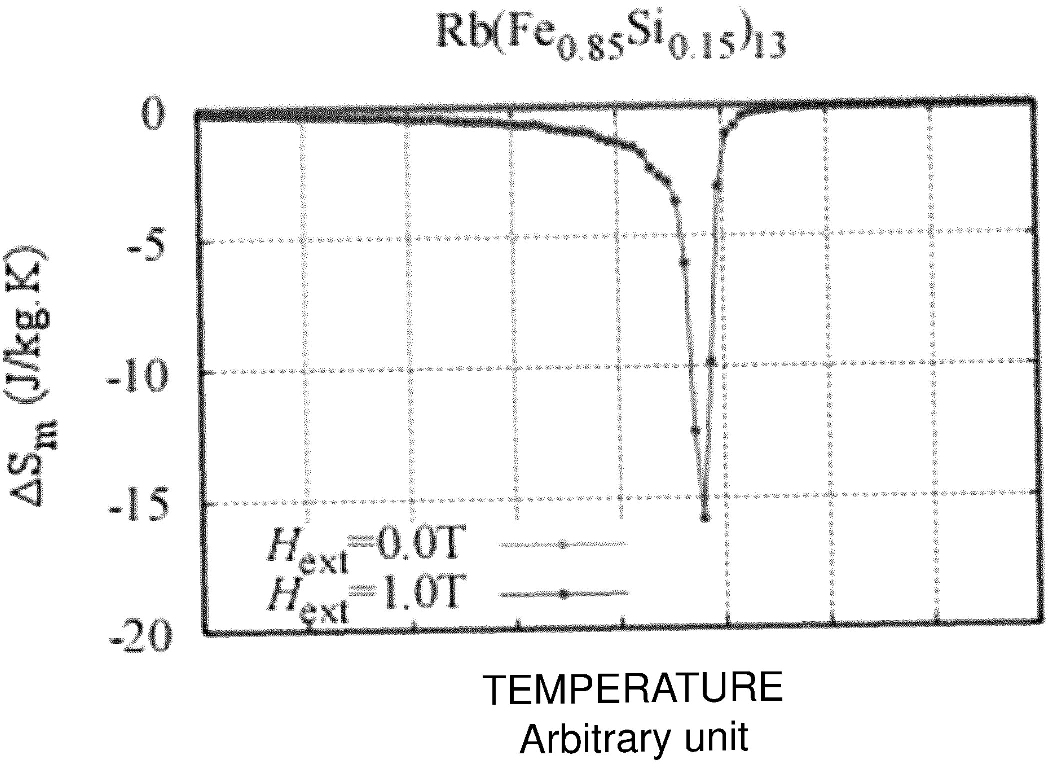
Rb(Fe0.85Si0.15)13
0
-5
-10
-15
-20
ΔSm (J/kg.K)
Hext=0.0T
Hext=1.0T
TEMPERATURE
Arbitrary unit

FIG. 20

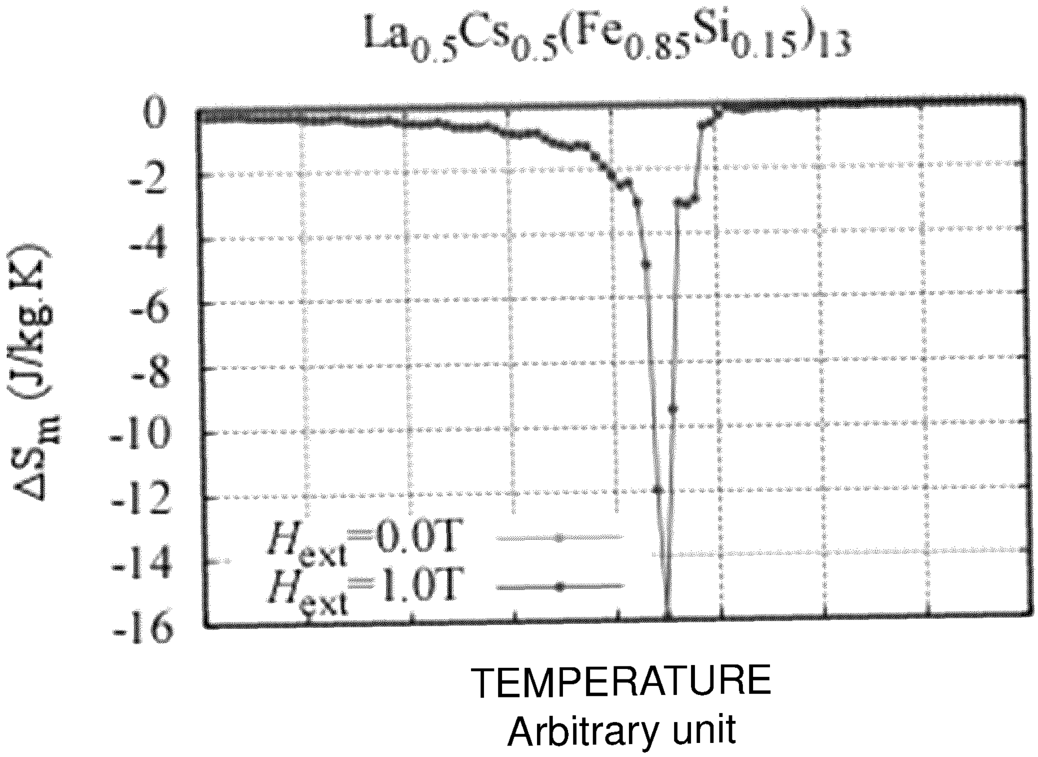
La0.5Cs0.5(Fe0.85Si0.15)13
0
-2
-4
-6
-8
-10
-12
-14
-16
ΔSm (J/kg.K)
Hext=0.0T
Hext=1.0T
TEMPERATURE
Arbitrary unit

FIG. 21

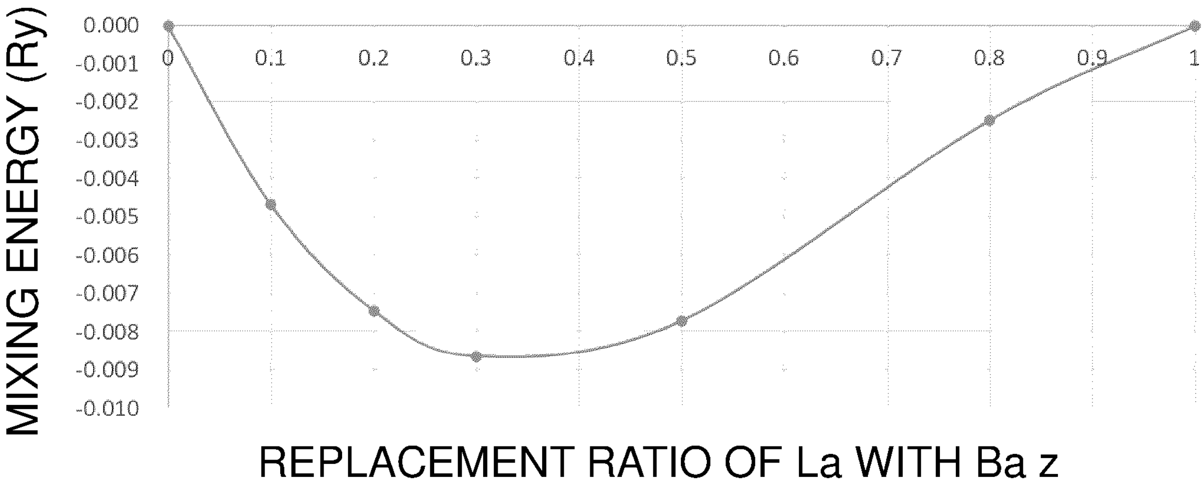


MIXING ENERGY

FIG. 22

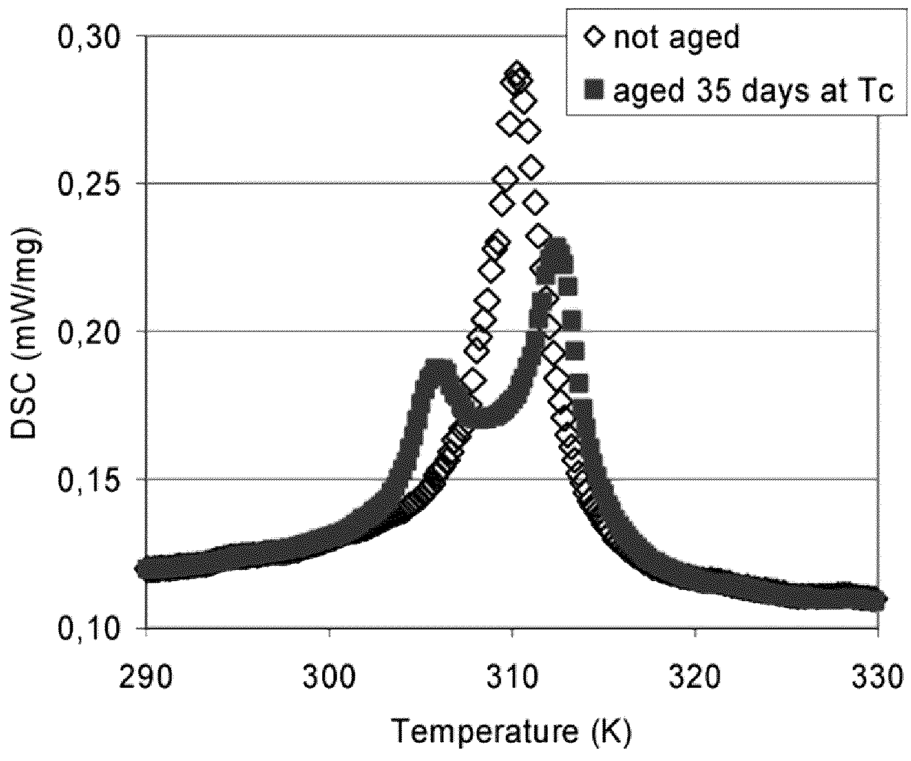


CHANGE IN CURIE TEMPERATURE

FIG. 23

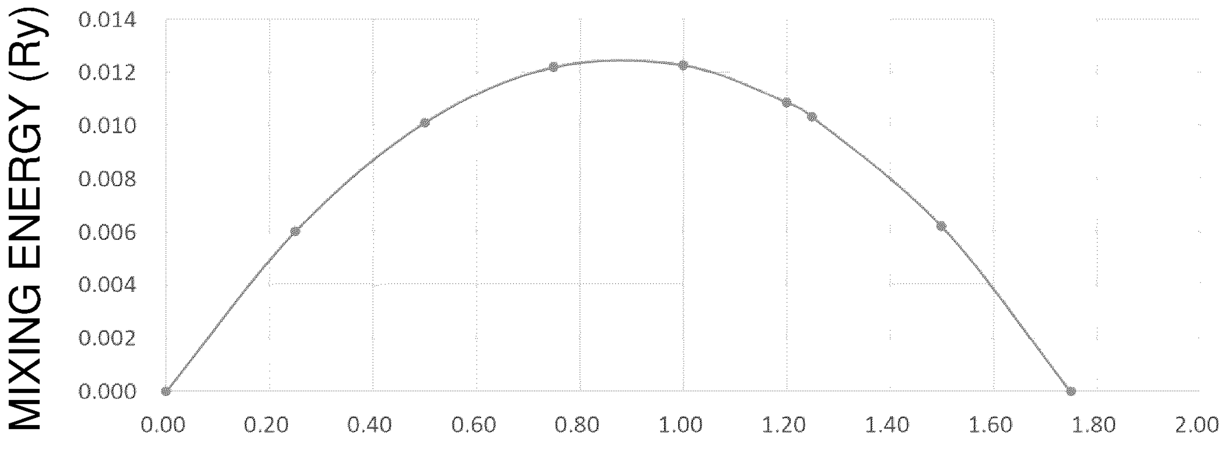


MIXING ENERGY DUE TO HYDROGEN INSERTION

FIG. 24

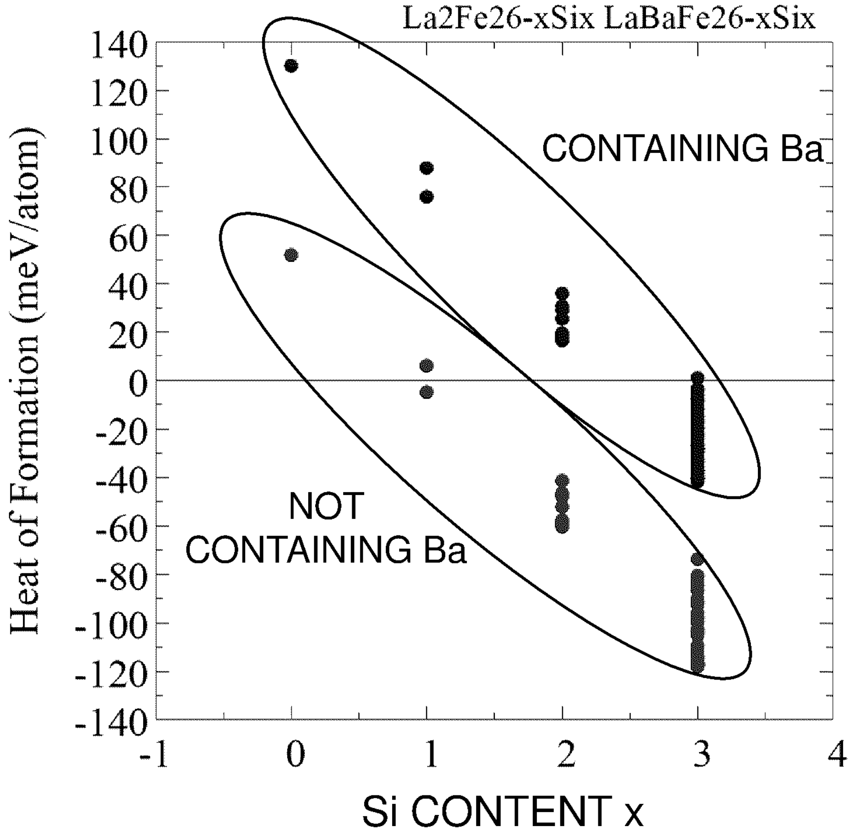


FIG. 25

**INTERNATIONAL SEARCH REPORT**

International application No. **PCT/JP2022/047404**

**A. CLASSIFICATION OF SUBJECT MATTER**

***C22C 38/00***(2006.01)i; ***H01F 1/01***(2006.01)i; ***F25B 21/00***(2006.01)i
FI: C22C38/00 303Z; H01F1/01 170; F25B21/00 A

According to International Patent Classification (IPC) or to both national classification and IPC

**B. FIELDS SEARCHED**

Minimum documentation searched (classification system followed by classification symbols)

C22C38/00; H01F1/01; F25B21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 藤田麻哉, ハイブリッド式常温磁気冷凍実現のためのメタ磁性型材料の磁気熱量効果制御, 科学研究費補助金研究成果報告書, 課題番号: 20360289 [online], 2012. [retrieved on 02 February 2023], Internet : URL:https://kaken.nii.ac.jp/ja/file/KAKENHI-PROJECT-20360289/20360289seika.pdf>, (FUJITA, Asaya. Control of magnetocaloric effect in metamagnetic materials to realize hybrid-type room temperature magnetic refrigeration. Report for the Grant-in-Aid of Scientific Research. assignment number: 20360289) entire text, all drawings | 1-10 |
| A | JP 2011-518943 A (ARCELORMITTAL-STAINLESS & NICKEL ALLOYS) 30 June 2011 (2011-06-30) entire text, all drawings | 1-10 |
| A | JP 2012-501088 A (VACUUMSCHMELZE GMBH & CO. KG.) 12 January 2012 (2012-01-12) entire text, all drawings | 1-10 |
| A | JP 2006-283074 A (HITACHI METALS, LTD.) 19 October 2006 (2006-10-19) entire text, all drawings | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 January 2023** | **21 February 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/047404**

**C. DOCUMENTS CONSIDERED TO BE RELEVANT**

| Category* | Citation of document, with indication, where appropriate, of the relevant passages | Relevant to claim No. |
|---|---|---|
| A | JP 2006-274345 A (HITACHI METALS, LTD.) 12 October 2006 (2006-10-12) entire text, all drawings | 1-10 |
| A | JP 2011-162811 A (SUMITOMO METAL MINING CO., LTD.) 25 August 2011 (2011-08-25) paragraphs [0021], [0035]-[0037] | 1-10 |
| A | JP 2012-504861 A (VACUUMSCHMELZE GMBH & CO. KG.) 23 February 2012 (2012-02-23) claims | 1-10 |
| A | CN 107841293 A (UNIV. XIAN TECHNOLOGY) 27 March 2018 (2018-03-27) entire text, all drawings | 1-10 |
| A | CN 1450190 A (INST. OF PHYSICS, CAS) 22 October 2003 (2003-10-22) entire text, all drawings | 1-10 |

Form PCT/ISA/210 (second sheet) (January 2015)

**INTERNATIONAL SEARCH REPORT**
**Information on patent family members**

International application No.
**PCT/JP2022/047404**

| Patent document cited in search report | Publication date (day/month/year) | Patent family member(s) | Publication date (day/month/year) |
|---|---|---|---|
| JP 2011-518943 A | 30 June 2011 | US 2011/0020661 A1<br>entire text, all drawings<br>WO 2009/103889 A1<br>EP 2071593 A1<br>KR 10-2010-0098430 A<br>CN 101919010 A | |
| JP 2012-501088 A | 12 January 2012 | US 2011/0140031 A1<br>entire text, all drawings<br>GB 2471403 A<br>WO 2010/038099 A1<br>KR 10-2010-0108456 A<br>CN 102027551 A | |
| JP 2006-283074 A | 19 October 2006 | (Family: none) | |
| JP 2006-274345 A | 12 October 2006 | (Family: none) | |
| JP 2011-162811 A | 25 August 2011 | (Family: none) | |
| JP 2012-504861 A | 23 February 2012 | US 2011/0151230 A1<br>claims<br>GB 2470687 A<br>WO 2010/038098 A1<br>KR 10-2010-0123747 A<br>CN 102282632 A | |
| CN 107841293 A | 27 March 2018 | (Family: none) | |
| CN 1450190 A | 22 October 2003 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008150695 A


### Non-patent literature cited in the description


- *IEEE TRANSACTIONS ON MAGNETICS,* October 2011, vol. 47 (10
- *Intermetallics,* 2012, vol. 20, 160-169
- Introduction to Computational Materials Design. Osaka University Press
- **TAMIO OGUCHI.** Band Theory. Uchida Rokakuho Publishing Co., Ltd,
- *IEEJ Journal,* 2004, vol. 124 (7
- *J. Mag. Mag. Mat.,* 2009, vol. 321, 3571